(19)

Europäisches Patentamt
European Patent Office
Office européen des brevets

(11) **EP 4 738 826 A1**

(12) **EUROPEAN PATENT APPLICATION**
published in accordance with Art. 153(4) EPC

(43) Date of publication:
**06.05.2026 Bulletin 2026/19**

(21) Application number: **24832526.8**

(22) Date of filing: **28.06.2024**

(51) International Patent Classification (IPC):
*H04N 19/196* (2014.01)    *H04N 19/124* (2014.01)
*H04N 19/13* (2014.01)    *H04N 19/136* (2014.01)
*G06N 3/0464* (2023.01)    *G06N 3/048* (2023.01)
*G06N 3/084* (2023.01)    *G06V 10/44* (2022.01)
*G06V 10/82* (2022.01)    *G06V 10/764* (2022.01)

(52) Cooperative Patent Classification (CPC):
**G06N 3/0464; G06N 3/048; G06N 3/084;
G06V 10/44; G06V 10/764; G06V 10/82;
H04N 19/124; H04N 19/13; H04N 19/136;
H04N 19/196**

(86) International application number:
**PCT/KR2024/009148**

(87) International publication number:
**WO 2025/005750 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.06.2023   KR 20230083810
11.07.2023   KR 20230089970
10.10.2023   KR 20230134679
27.06.2024   KR 20240084730**

(71) Applicants:
• **Electronics and Telecommunications
Research Institute
Daejeon 34129 (KR)**
• **University-Industry Cooperation Group Of
Kyung Hee University
Yongin-si, Gyeonggi-do 17104 (KR)**

(72) Inventors:
• **JEONG, Se Yoon
Daejeon 34129 (KR)**

• **KIM, Youn Hee
Daejeon 34129 (KR)**
• **LEE, Joo Young
Daejeon 34129 (KR)**
• **CHOI, Jin Soo
Daejeon 34129 (KR)**
• **KANG, Jung Won
Daejeon 34129 (KR)**
• **KIM, Yeong Woong
Yongin-si, Gyeonggi-do 17104 (KR)**
• **KIM, Hui Yong
Yongin-si, Gyeonggi-do 17104 (KR)**
• **YU, Jang Hyun
Yongin-si, Gyeonggi-do 17104 (KR)**
• **JANG, Seung Hwan
Yongin-si, Gyeonggi-do 17104 (KR)**
• **JEONG, Hye Won
Yongin-si, Gyeonggi-do 17104 (KR)**

(74) Representative: **Betten & Resch
Patent- und Rechtsanwälte PartGmbB
Maximiliansplatz 14
80333 München (DE)**

(54) **NEURAL NETWORK-BASED METHOD AND APPARATUS FOR COMPRESSING MULTI-LAYER
FEATURE MAP**

(57)    A method and an apparatus for encoding a multi-layer feature map, and a recording medium, of the present disclosure may comprise the steps of: extracting, from an input image, a multi-layer feature map including a plurality of feature maps in a hierarchical form; outputting a single-layered fusion latent representation by sequentially encoding the multi-layer feature map through consecutive encoding blocks; and encoding the single-layered fusion latent representation into a bit stream.

【FIG. 7】

**Description**

[Technical Field]

The present disclosure relates to a technology for providing a method for encoding a feature map extracted through an artificial neural network to reduce the compression bit amount of a feature map and minimize performance degradation of a machine task performed by using a decoded feature map.

[Background Art]

As a machine task is widely used in various devices including a mobile device as well as a large server, a growing number of feature map extraction means and task execution means are not in the same device, but in a different device.
When a feature map extraction means and a task execution means are separated, an extracted feature map must be delivered to a task execution means, but since the amount of data in a feature map is very large, a feature map encoding method for dramatically reducing the amount of data in a feature map while minimizing the degradation of task execution performance is required.

[Disclosure]

[Technical Problem]

The existing technology encodes a multi-layer feature map independently or makes it into one fusion feature map to perform encoding, and for the former, there is a problem of increased complexity due to multiple encodings in parallel, and for the latter, there is a problem of increased complexity due to the serial execution of a fusion process and a latent representation extraction process and a disadvantage of not being able to sufficiently utilize a sequential attribute between layers.

[Technical Solution]

A multi-layer feature map encoding method, device and recording medium of the present disclosure may include extracting a multi-layer feature map including a plurality of feature maps in a layer form from an input image, sequentially encoding the multi-layer feature map through consecutive encoding blocks to output a fusion latent representation of a single layer, and encoding a fusion latent representation of the single layer into a bitstream.
In a multi-layer feature map encoding method, device and recording medium of the present disclosure, the consecutive encoding blocks may include a first encoding block that uses a feature map having the highest resolution of the multi-layer feature map as input, a second encoding block that uses a first intermediate latent representation, which is output of a first encoding block, as input, a third encoding block that uses a first fusion latent representation, which is output of a second encoding block, as input, and a fourth encoding block that uses a second fusion latent representation, which is output of a third encoding block, as input to output a fusion latent representation of the single layer.
In a multi-layer feature map encoding method, device and recording medium of the present disclosure, input of the second encoding block, the third encoding block and the fourth encoding block may include a feature map of the multi-layer feature map having the same resolution as an input intermediate latent representation or fusion latent representation.
In a multi-layer feature map encoding method, device and recording medium of the present disclosure, the first encoding block, the second encoding block and the third encoding block may include a convolutional neural network layer using a nxn-sized kernel in the same structure and a nonlinear layer of LeakyReLU.
In a multi-layer feature map encoding method, device and recording medium of the present disclosure, the fourth encoding block may not include a nonlinear layer of the LeakyReLU.
In a multi-layer feature map encoding method, device and recording medium of the present disclosure, resolution of output of the first encoding block, the second encoding block, the third encoding block and the fourth encoding block may be lower than resolution of input.
In a multi-layer feature map encoding method, device and recording medium of the present disclosure, the consecutive encoding blocks may include a first encoding block that uses a feature map having the highest resolution of the multi-layer feature map as input, a second encoding block that uses a first intermediate latent representation, which is output of a first encoding block, as input, a third encoding block that uses a feature map of the multi-layer feature map having lower resolution than a first fusion latent representation, which is output of a second encoding block, as input, and a fourth encoding block that uses a second intermediate latent representation, which is output of a third encoding block, and the first fusion latent representation as input to output a fusion latent representation of the single layer.
In a multi-layer feature map encoding method, device and recording medium of the present disclosure, input of the second encoding block and the fourth encoding block may include a feature map of the multi-layer feature map having the same resolution as an input intermediate latent representation or fusion latent representation.

In a multi-layer feature map encoding method, device and recording medium of the present disclosure, the first encoding block, the second encoding block and the third encoding block may include a convolutional neural network layer using a nxn-sized kernel in the same structure and a nonlinear layer of LeakyReLU.

In a multi-layer feature map encoding method, device and recording medium of the present disclosure, the fourth encoding block may not include a nonlinear layer of the LeakyReLU.

In a multi-layer feature map encoding method, device and recording medium of the present disclosure, resolution of output of the first encoding block, the second encoding block and the fourth encoding block may be lower than resolution of input, and resolution of output of the third encoding block may be higher than resolution of input.

A multi-layer feature map decoding method, device and recording medium of the present disclosure may include decoding a fusion latent representation of a single layer for a multi-layer feature map including a plurality of feature maps in a layer form from a bitstream; and sequentially decoding the multi-layer feature map through consecutive decoding blocks from a fusion latent representation of the single layer.

In a multi-layer feature map decoding method, device and recording medium of the present disclosure, the consecutive decoding blocks may include a first decoding block that uses a fusion latent representation of the single layer as input, a second decoding block that uses a first feature map of the multi-layer feature map with the lowest resolution, which is output of a first decoding block, as input, a third decoding block that uses a second feature map, which is output of a second decoding block with higher resolution than the first feature map, as input, and a fourth decoding block that uses a third feature map, which is output of a third decoding block having higher resolution than the second feature map, as input to output a fourth feature map of the multi-layer feature map having the highest resolution.

In a multi-layer feature map decoding method, device and recording medium of the present disclosure, the first decoding block, the second decoding block and the third decoding block may include a convolutional neural network layer using a nxn-sized kernel in the same structure and a nonlinear layer of LeakyReLU.

In a multi-layer feature map decoding method, device and recording medium of the present disclosure, the fourth decoding block may not include a nonlinear layer of the LeakyReLU.

In a multi-layer feature map decoding method, device and recording medium of the present disclosure, resolution of output of the first decoding block, the second decoding block, the third decoding block and the fourth decoding block may be higher than resolution of input.

In a multi-layer feature map decoding method, device and recording medium of the present disclosure, the consecutive decoding blocks may include a first decoding block that uses a fusion latent representation of the single layer as input, a second decoding block that uses a first feature map, which is output of a first decoding block, as input to output a second feature map of the multi-layer feature map having the lowest resolution, a third decoding block that uses the first feature map as input to output a third feature map having higher resolution than the first feature map, and a fourth decoding block that uses the third feature map as input to output a fourth feature map of the multi-layer feature map having the highest resolution.

In a multi-layer feature map decoding method, device and recording medium of the present disclosure, the second decoding block, the third decoding block and the fourth decoding block may include a convolutional neural network layer using a nxn-sized kernel in the same structure and a nonlinear layer of LeakyReLU.

In a multi-layer feature map decoding method, device and recording medium of the present disclosure, resolution of output of the first decoding block, the third decoding block and the fourth decoding block may be higher than resolution of input, and resolution of output of the second decoding block may be lower than resolution of input.

[Technical Effect]

The present disclosure may sequentially fuse a feature map of each layer in a multi-layer feature map, achieving high encoding performance with a simple neural network structure simultaneously with effectively reducing redundancy between layers.

The present disclosure may achieve significantly better encoding efficiency than feature map compression using an existing image compression codec, and it has an advantage of being a feature map compression technology composed only of a neural network structure without the need to use an artificial neural network and an image compression codec at the same time.

In addition, high encoding efficiency may be achieved even when used with a video compression codec.

[Brief Description of Drawings]

FIG. 1 shows an example of a machine task result for detecting and classifying an object by using Fast R-CNN, one of artificial neural networks.

FIG. 2 shows an example in which a multi-layer feature map is extracted to perform a machine task.

FIG. 3 shows a structure of Mask R-CNN, an artificial neural network model frequently used for object region segmentation.

FIG. 4 shows an example of multi-layer feature map PK extracted through a FPN of Mask R-CNN.

FIG. 5 shows an embodiment of a multi-layer feature map.

FIG. 6 shows an example in which a feature map extraction means exists in a mobile device, but a specific task execution means such as object segmentation, disparity map estimation or image reconstruction, etc. exists in a cloud server.

FIG. 7 shows a process of encoding a neural network-based image.

FIG. 8 shows an example of an encoding neural network of FIG. 7.

FIG. 9 shows an example of a decoding neural network of FIG. 7.

FIG. 10 shows a process of performing neural network-based multi-layer feature map compression (or encoding/-decoding).

FIG. 11 shows a multi-layer feature map sequential fusion encoding neural network, which is an example of an encoding neural network of FIG. 10.

FIG. 12 shows a multi-layer feature map sequential fusion decoding neural network, which is an example of a decoding neural network of FIG. 10.

FIG. 13 shows a multi-layer feature map encoding method.

FIG. 14 shows a multi-layer feature map decoding method.

FIG. 15 shows a first embodiment at a high level of a multi-layer feature map encoding and decoding system using a component of the present disclosure.

FIG. 16 shows a second embodiment at a high level of a multi-layer feature map encoding and decoding system using a component of the present disclosure.

FIG. 17 shows detailed implementation of a neural network block used in this embodiment.

FIG. 18 shows a first embodiment of a multi-layer feature map sequential fusion encoding neural network, which is a multi-layer feature map sequential fusion encoding means.

FIG. 19 shows a second embodiment of a multi-layer feature map sequential fusion encoding neural network, which is a multi-layer feature map sequential fusion encoding means.

FIG. 20 shows a third embodiment of a multi-layer feature map sequential fusion encoding neural network, which is a multi-layer feature map sequential fusion encoding means.

FIG. 21 shows a fourth embodiment of a multi-layer feature map sequential fusion encoding neural network, which is a multi-layer feature map sequential fusion encoding means.

FIG. 22 shows a first embodiment of a multi-layer feature map sequential fusion decoding neural network, which is a multi-layer feature map sequential fusion decoding means.

FIG. 23 shows a second embodiment of a multi-layer feature map sequential fusion decoding neural network, which is a multi-layer feature map sequential fusion decoding means.

FIG. 24 shows a third embodiment of a multi-layer feature map sequential fusion decoding neural network, which is a multi-layer feature map sequential fusion decoding means.

FIG. 25 shows an example of multi-layer feature map general encoding that may be used with multi-layer sequential fusion decoding in the present disclosure.

FIG. 26 shows a fourth embodiment of a multi-layer feature map sequential fusion decoding neural network, which is a multi-layer feature map sequential fusion decoding means.

FIG. 27 shows a fifth embodiment of a multi-layer feature map sequential fusion decoding neural network, which is a multi-layer feature map sequential fusion decoding means.

FIG. 28 shows an example of neural network-based fusion latent representation entropy encoding.

FIG. 29 shows an example in which a latent representation for an image is partitioned unevenly in a channel direction to sequentially estimate a probability distribution.

FIG. 30 shows an example in which 10 probability distribution estimations are performed sequentially after partitioning a latent representation into 10 groups.

FIG. 31 shows an example in which feature map compression (or encoding/decoding) is performed based on a multi-layer feature map sequential fusion encoder/decoder of the present disclosure and an encoder/a decoder of an existing image compression codec and an example in which an artificial neural network is used for feature map compression (or encoding/decoding).

FIG. 32 shows details of a NN video encoder and a NN video decoder of FIG. 31.

FIG. 33 shows a process of performing fusion latent representation encoding and decoding using an existing image compression codec and a multi-layer feature map sequential fusion encoder/decoder of the present disclosure.

FIG. 34 shows a configuration of a fusion latent representation feature map.

FIG. 35 shows frame packing through spatial, temporal and spatio-temporal arrangement for inputting a feature map into an existing image compression codec.

FIG. 36 shows an example of a block diagram applied to a multi-layer feature map encoder/decoder by using a multi-layer feature map that was previously decoded temporally.

FIG. 37 shows an example of a neural network that applies a multi-layer feature map sequential fusion encoding means to an image by utilizing a multi-layer temporal context in FIG. 18, which is an example of a multi-layer feature map sequential fusion encoding neural network.

FIG. 38 shows an example of a neural network applied to a neural network-based fusion latent representation entropy encoder/decoder by utilizing a multi-layer temporal context.

FIG. 39 shows an example of a multi-layer temporal context sequential fusion neural network, which is a multi-layer temporal context sequential fusion means.

FIG. 40 shows an example of a neural network that applies a multi-layer feature map sequential fusion decoding means to a video by utilizing a multi-layer temporal context.

FIG. 41 shows an example of a neural network that applies a multi-layer feature map sequential fusion decoding means to an image by utilizing a multi-layer temporal context.

FIG. 42 shows an example of a neural network that extracts a temporal context of each layer feature map that was decoded previously without using motion information.

FIG. 43 shows an example of a neural network that extracts a temporal context of each layer feature map that was decoded previously by using motion information.

FIG. 44 shows detailed implementation of a neural network block and a function block diagram of the present disclosure.

FIG. 45 shows an example of a motion information extraction neural network, which is a means for extracting motion information.

FIG. 46 shows an example of a motion vector encoding neural network, which is a motion vector encoding means.

FIG. 47 shows an example of a motion vector decoding neural network, which is a motion vector decoding means.

FIG. 48 shows an example of a motion compensation neural network, which is a motion compensation means.

FIG. 49 shows an example of a neural network that extracts a temporal context of each layer feature map that was decoded previously by using a deformable convolutional neural network layer.

FIG. 50 shows an example of a deformable convolutional neural network.

FIG. 51 shows an example of an offset extraction means neural network for extracting an offset used for a deformable convolutional neural network.

FIG. 52 shows an example of an offset encoding neural network, which is an offset encoding means.

FIG. 53 shows an example of an offset decoding neural network, which is an offset decoding means.

FIG. 54 shows an example of a motion compensation neural network, which is a motion compensation means using a deformable convolutional neural network layer.

[Mode for Invention]

As the present disclosure may make various changes and have several embodiments, specific embodiments will be illustrated in a drawing and described in detail. But, it is not intended to limit the present disclosure to a specific embodiment, and it should be understood that it includes all changes, equivalents or substitutes included in an idea and a technical scope for the present disclosure. A similar reference numeral in a drawing refers to a like or similar function across multiple aspects. A shape and a size, etc. of elements in a drawing may be exaggerated for a clearer description. A detailed description on exemplary embodiments described below refers to an accompanying drawing which shows a specific embodiment as an example. These embodiments are described in detail so that those skilled in the pertinent art can implement an embodiment. It should be understood that a variety of embodiments are different each other, but they do not need to be mutually exclusive. For example, a specific shape, structure and characteristic described herein may be implemented in other embodiment without departing from a scope and a spirit of the present disclosure in connection with an embodiment. In addition, it should be understood that a position or an arrangement of an individual element in each disclosed embodiment may be changed without departing from a scope and a spirit of an embodiment. Accordingly, a detailed description described below is not taken as a limited meaning and a scope of exemplary embodiments, if properly described, are limited only by an accompanying claim along with any scope equivalent to that claimed by those claims.

In the present disclosure, a term such as first, second, etc. may be used to describe various components, but the components should not be limited by the terms. The terms are used only to distinguish one component from other components. For example, without going beyond a scope of a right of the present disclosure, a first component may be referred to as a second component and similarly, a second component may be also referred to as a first component. A term, and/or, includes a combination of a plurality of relative entered items or any item of a plurality of relative entered items.

When a component in the present disclosure is referred to as being "linked" or "connected" to other component, it should be understood that it may be directly linked or connected to other component, but other component may exist in the middle. On the other hand, when a component is referred to as being "directly linked" or "directly connected" to other component, it should be understood that other component does not exist in the middle.

As construction units shown in an embodiment of the present disclosure are independently shown to represent different characteristic functions, it does not mean that each construction unit is composed in a construction unit of separate hardware or one software. In other words, as each construction unit is included by being enumerated as each construction unit for convenience of a description, at least two construction units of each construction unit may be combined to form one construction unit or one construction unit may be divided into a plurality of construction units to perform a function, and an integrated embodiment and a separate embodiment of each construction unit are also included in a scope of a right of the present disclosure unless they are beyond the essence of the present disclosure.

A term used in the present disclosure is just used to describe a specific embodiment, and is not intended to limit the present disclosure. A singular expression, unless the context clearly indicates otherwise, includes a plural expression. In the present disclosure, it should be understood that a term such as "include" or "have", etc. is just intended to designate the presence of a feature, a number, a step, an operation, an element, a part or a combination thereof described in the present specification, and it does not exclude in advance a possibility of presence or addition of one or more other features, numbers, steps, operations, elements, parts or their combinations. In other words, a description of "including" a specific configuration in the present disclosure does not exclude a configuration other than a corresponding configuration, and it means that an additional configuration may be included in a scope of a technical idea of the present disclosure or an embodiment of the present disclosure.

Some elements of the present disclosure are not a necessary element which performs an essential function in the present disclosure and may be an optional element for just improving performance. The present disclosure may be implemented by including only a construction unit which is necessary to implement essence of the present disclosure except for an element used just for performance improvement, and a structure including only a necessary element except for an optional element used just for performance improvement is also included in a scope of a right of the present disclosure.

Hereinafter, an embodiment of the present disclosure is described in detail by referring to a drawing. In describing an embodiment of the present specification, when it is determined that a detailed description on a relevant disclosed configuration or function may obscure a gist of the present specification, such a detailed description is omitted, and the same reference numeral is used for the same element in a drawing and an overlapping description on the same element is omitted.

A growing number of artificial neural networks (ANN) are utilized in a machine task such as a variety of machine vision tasks including object classification, object recognition, object detection, object segmentation, object tracking, etc. or a variety of image processing tasks including super-resolution, frame-interpolation, etc.

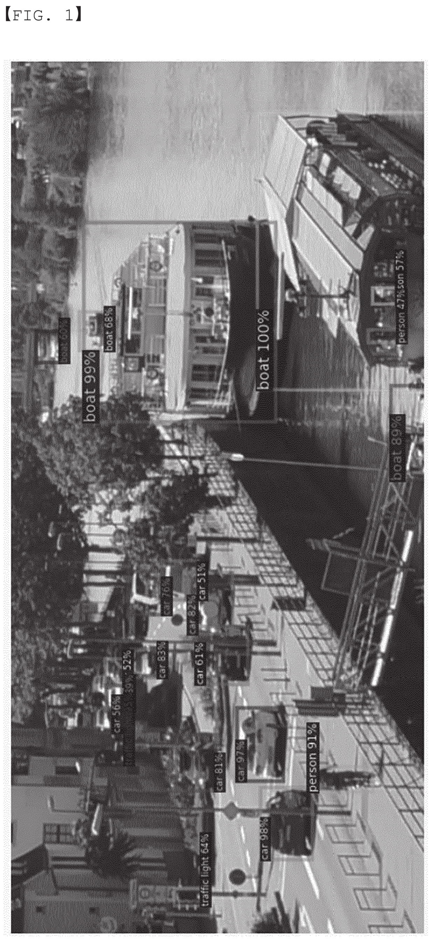

FIG. 1 shows an example of a machine task result for detecting and classifying an object by using Fast R-CNN, one of artificial neural networks.

Referring to FIG. 1, recognized objects in FIG. 1 may be classified into an automobile, a ship, a person, a traffic signal, etc., respectively, each region may be composed of squares and probability information (or accuracy) on whether a corresponding region matches a classified object may be included. Here, a square is an example of a shape of a region, and a shape of a region may include a circle, a polygon, etc. In addition, through region segmentation in a region, a range of a region may be matched to that of an object as much as possible.

An artificial neural network model that performs a machine task may be composed of a feature map extraction means that generally extracts a feature from input data or an input image and a task execution means that actually performs a specific machine task based on an extracted feature. In this case, when input is in a form of an image, 'extracted feature' may be generally referred to as a feature map. In the present disclosure, the description of the invention is described by using an expression called a feature map, but the present disclosure may also be applied equally to a feature not in a form of a map.

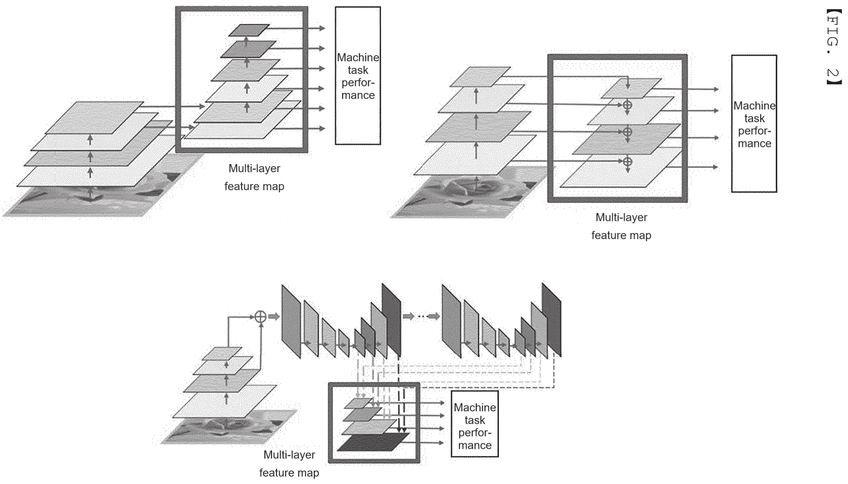

FIG. 2 shows an example in which a multi-layer feature map is extracted to perform a machine task.

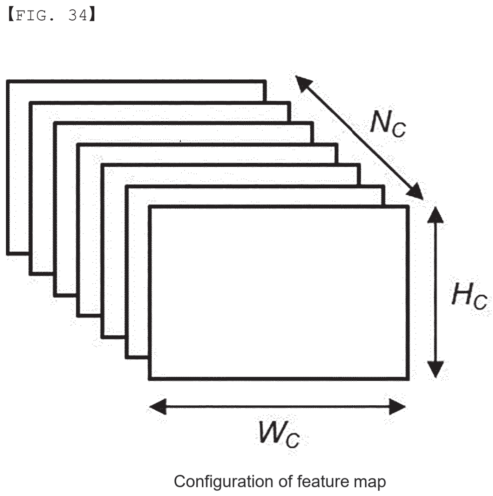

The present disclosure may be applied to a pyramid-structured feature map or a multi-layer feature map. A multi-layer feature map may have a pyramid structure in which a feature map with different resolution forms multiple layers. As an example, resolution of a feature map may decrease as a feature map belongs to a higher layer (or as a layer index increases), and resolution of a feature map may increase as a feature map belongs to a lower layer (or as a layer index decreases). As another example, resolution of a feature map may increase as a feature map belongs to a higher layer (or as a layer index increases), and resolution of a feature map may decrease as a feature map belongs to a lower layer (or as a layer index decreases). In addition, as in FIG. 34 will be described later, feature maps within the same layer may have the same resolution.

Layer information (e.g., a layer index, layer resolution, etc.) of each layer within a multi-layer feature map may be included in feature map information and transmitted in performing a machine task.

The present disclosure may relate to a compression (or encoding/decoding) method, device and recording medium for this multi-layer feature map.

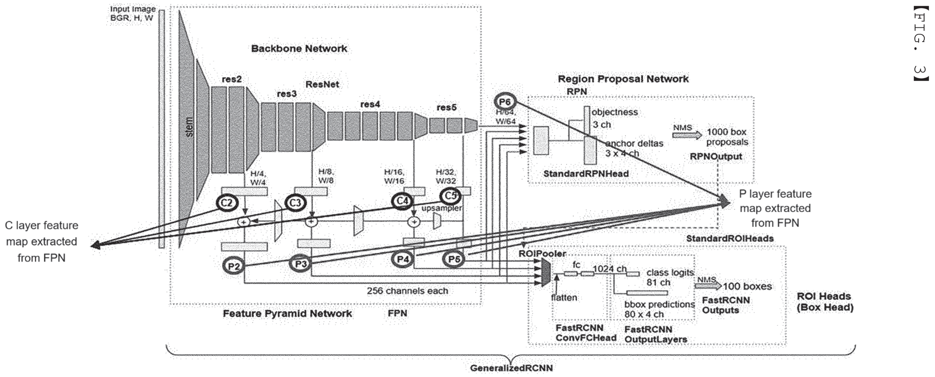

FIG. 3 shows a structure of Mask R-CNN, an artificial neural network model frequently used for object region segmentation.

In a Mask R-CNN structure of FIG. 3, a feature pyramid network (FPN) may be used as a means of extracting a multi-layer feature map, and a region proposal network (RPN) and a region of interest heads (ROI Heads) may be used as a means of performing a machine task.

A feature pyramid network (FPN) is an example of extracting a multi-layer feature map, and a C-layer feature map and a P-layer feature map may be extracted by a FPN. Here, both a C-layer feature map and a P-layer feature map may be a multi-layer feature map in the present disclosure.

Hereinafter, in the present disclosure, a P-layer feature map in FIG. 3 is used to describe the invention. However, it is just for convenience of a description, and a description of the present disclosure may also be applied equally to a C-layer feature map in FIG. 3 or other forms of multi-layer feature maps.

When input is an image, a form of a feature map may be represented as a two-dimensional array in width x height, and since a feature map of one layer is usually composed of multiple channels as in FIG. 34 which will be described later, a feature map of each layer may be expressed as a three-dimensional array having a size equal to width_size x height_size x channel_number.

In other words, if a feature map of layer k is Fk, Fk may be represented as three-dimensional array Fk[x][y][c] composed of extracted feature values. In this case, x and y represent a horizontal position and a vertical position of a feature value, respectively, and c may represent a channel index. For example, multi-layer feature map Ck or multi-layer feature map Pk extracted from a FPN may be referred to as multi-layer feature map Fk in the present disclosure, and may be expressed as three-dimensional array Fk[x][y][c].

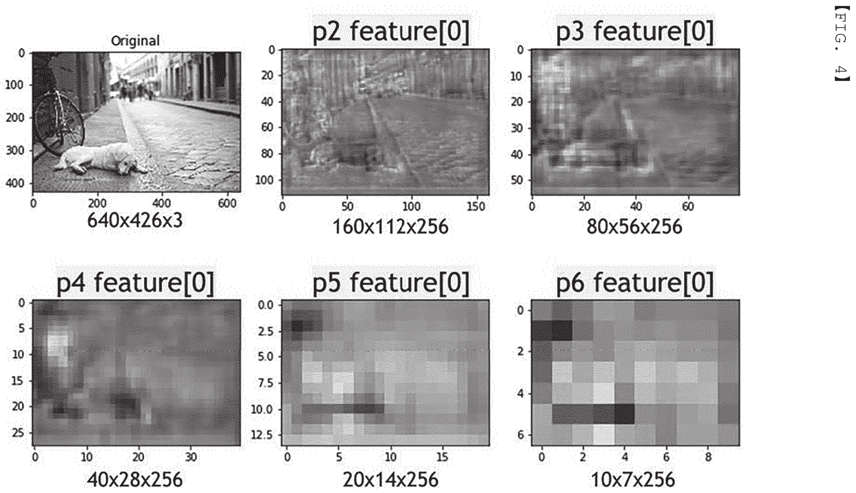

FIG. 4 shows an example of multi-layer feature map PK extracted through a FPN of Mask R-CNN.

Referring to FIG. 4, it is possible to confirm an example of a first channel in P-layer feature map Pk, which is a multi-layer feature map extracted through a FPN of Mask R-CNN in FIG. 3. In this case, layer index k may be 2, 3, 4, 5 or 6.

In other words, in a FPN, a feature map of each layer may be composed of 256 channels, but in FIG. 4, only a feature map corresponding to a first channel among the feature maps of each layer may be represented as an example. For reference, in a FPN, as a layer becomes deeper (a layer index increases), a size of a width and a height of a feature map may become smaller than a size (resolution) of an input image.

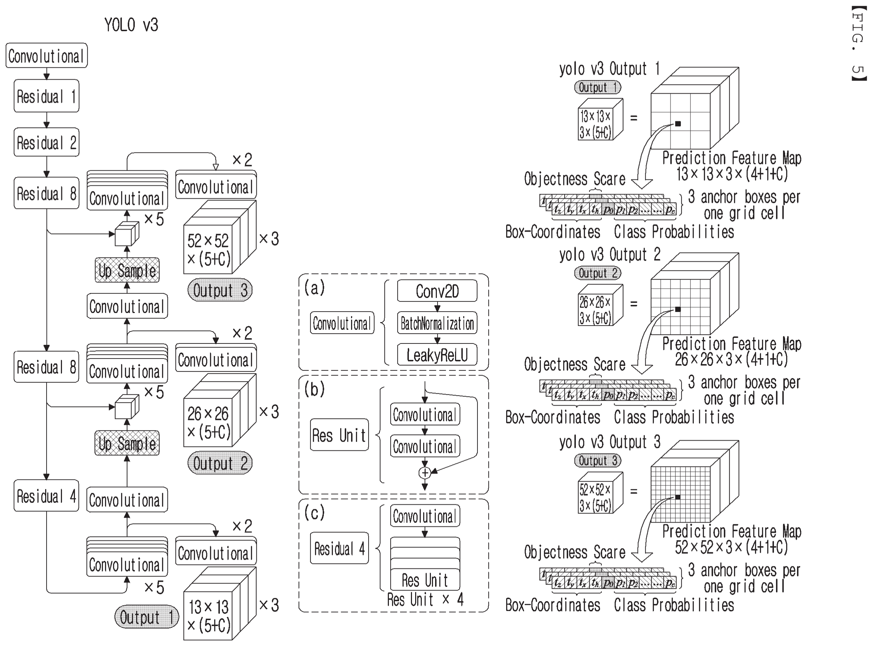

FIG. 5 shows an embodiment of a multi-layer feature map.

Referring to FIG. 5, even in a model for a machine task such as YOLO v3, a multi-layer feature map composed of three layers (Output 1, Output 2, Output 3) as in FIG. 5 may be extracted in a similar way to a P-layer feature map and used for machine task execution.

Specifically, the multi-layer feature map may be a case in which a pyramid structure similar to a FPN is used together with darknet 53 as a multi-layer feature map extraction means in YOLO v3.

As a machine task is widely used in various devices including a mobile device as well as a large server, a growing number of feature map extraction means and task execution means are not in the same device, but in a different device.

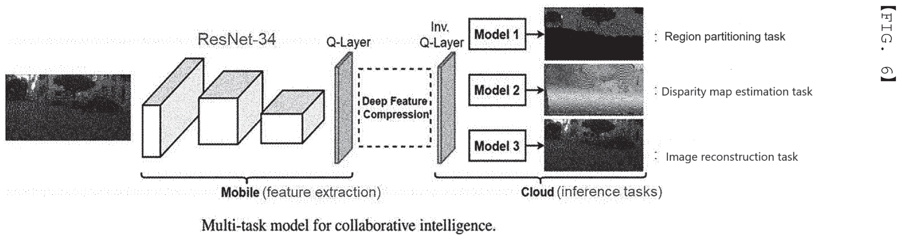

FIG. 6 shows an example in which a feature map extraction means exists in a mobile device, but a specific task execution means such as object segmentation, disparity map estimation or image reconstruction, etc. exists in a cloud server.

A feature map extracted from a mobile device may be transmitted to a server, a task is performed in a server based on a transmitted feature map and a result of task execution therefor may be transmitted back to a mobile device.

As in this example, when a feature map extraction means is separated from a task execution means, an extracted feature map must be transmitted to a task execution means, and a feature map encoding method for minimizing degradation of task execution performance simultaneously with minimizing the amount of data of a feature map to be transmitted or stored may be required.

As another example, even when a feature map extraction means and a task execution means exist in one device, an extracted feature map may be stored through a storage device and utilized by a task execution means later, and even in this case, a feature map compression (or encoding/decoding) method as above may also be required.

In the present disclosure, an image may refer to various types of images such as computer graphics, a holographic image, a feature map image extracted through a neural network, an ultrasonic image, etc. as well as a natural image acquired through a camera.

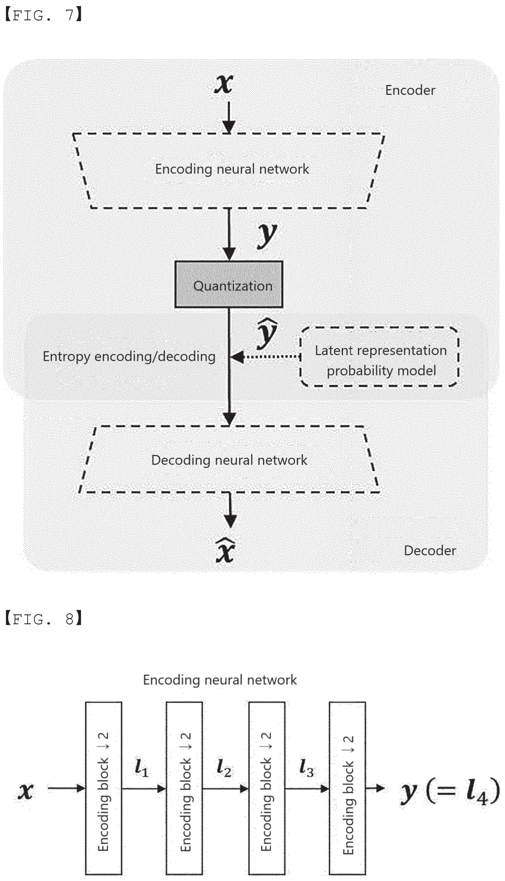

FIG. 7 shows a process of compressing a neural network-based image.

A core component of a neural network-based image compression (or encoding/decoding) method may include an encoding neural network, a decoding neural network, quantization, a latent representation probability model and entropy encoding and decoding, and a process of performing image compression (or encoding/decoding) is described as in 1) to 6) below along with FIG. 7.

1) In an encoder, image x to be encoded (i.e., an input image) may be transformed into latent representation y through an encoding neural network.

A latent representation may refer to one of a latent vector, a latent representation and a latent feature map.

2) Each component yi of latent representation y may be quantized.

3) Quantized latent representation ^y may be transmitted to a decoder in a form of a bitstream through entropy encoding based on learnable latent representation probability model P(^y) (^y).

4) A bitstream transmitted from an encoder may be reconstructed to ^y through entropy decoding based on the same latent representation probability model as in an encoder.

5) A decoding neural network may reconstruct an image by using ^y as input. In the present disclosure, a reconstructed image may be indicated as ^x.

6) A neural network parameter of a core component may be learned through a loss function and a backpropagation algorithm.

In FIG. 7, a block whose border is indicated by a dotted line may refer to a learnable parameter or neural network.

In the present disclosure, 'encoding block' refers to a neural network block usually used in an encoder of a neural network-based image compression (or encoding/decoding) method, and may have the following features.

An encoding block may output a feature map calculated by a learned weight by using an input image or an output feature map of another encoding block as input.

An encoding block may include a neural network structure such as a convolution layer, a transposed convolution layer, a fully connected layer, a vision transformer, etc.

In addition, an encoding block may include a nonlinear function such as a Rectified Linear Unit (ReLU), Tangent hyperbolic (Tanh), a sigmoid function, etc.

In addition, an encoding block may include an element-wise arithmetic operation such as a residual (skip) connection.

An encoding block may perform dimension reduction or dimension expansion on input by adjusting a stride of a neural network structure used (a convolution layer, a fully connected layer) or the number of nodes of a latent layer, and in particular, it may increase or decrease the spatial resolution (a horizontal size, a vertical size) of input.

In the following description, an encoding block (s↑) may refer to an encoding block that increases a horizontal size and a vertical size of input by s times, and an encoding block (s↓) may refer to an encoding block that decreases a horizontal size and a vertical size of input by s times.

In the present disclosure, a decoding block refers to a neural network block usually used in a decoder of a neural network-based image compression method, and may have the following features.

A decoding block may output a feature map calculated by a learned weight by using a latent vector for an input image or an output feature map of another decoding block as input.

A decoding block may include a neural network structure such as a convolution layer, a transposed convolution layer, a fully connected layer, a vision transformer, etc.

In addition, a decoding block may include a nonlinear function such as a Rectified Linear Unit (ReLU), Tangent hyperbolic (Tanh), a sigmoid function, etc.

In addition, a decoding block may include an element-wise arithmetic operation such as a residual (skip) connection.

A decoding block may perform dimension reduction or dimension expansion on input by adjusting a stride of a neural network structure used (a convolution layer, a fully connected layer) or the number of nodes of a latent layer, and in particular, it may increase or decrease the spatial resolution (a horizontal size, a vertical size) of input.

In the following description, a decoding block (s↑) may refer to a decoding block that increases a horizontal size and a vertical size of input by times, and a decoding block (s↓) may refer to a decoding block that decreases a horizontal size and a vertical size of input by times.

(1) Encoding Neural Network and Decoding Neural Network

In a neural network-based image compression method, input image x is transformed into latent representation y through consecutive encoding blocks, and a configuration of these encoding blocks may be referred to as an encoding neural network.

In a neural network-based image compression method, (quantized) latent representation ^y for an image is transformed into reconstructed image ^x through consecutive decoding blocks, and a configuration of these decoding blocks may be referred to as a decoding neural network.

FIG. 8 shows an example of an encoding neural network of FIG. 7.

An encoding neural network may use image x to be encoded as input and output latent representation y of an input image through N consecutive encoding blocks. In this regard, FIG. 8 may represent an embodiment of a case for N=4.

Here, N is a natural number equal to or greater than 1, which may include 2, 3, 4, 5, 6, 7, 8, etc. In addition, N may be a predefined value or a value determined by information signaled from a bitstream.

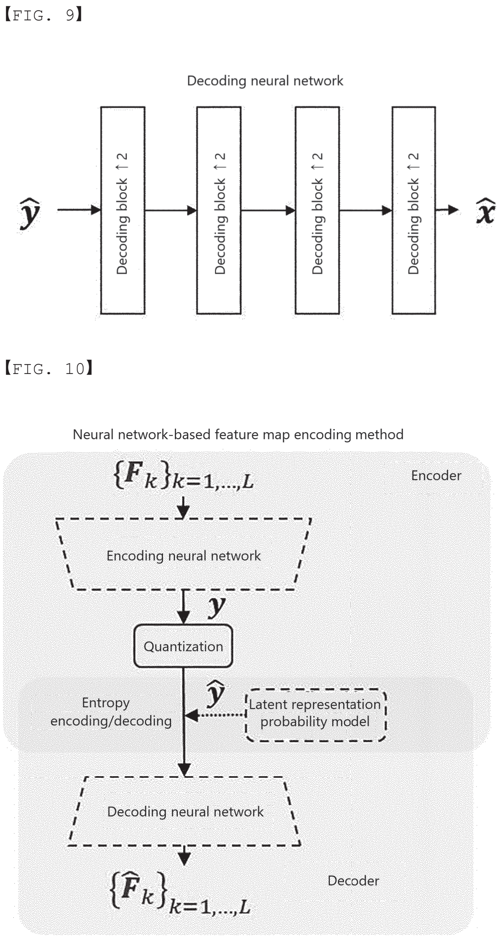

FIG. 9 shows an example of a decoding neural network of FIG. 7.

A decoding neural network may use quantized latent representation ^y as input and output reconstructed image ^x through N consecutive decoding blocks. In this regard, FIG. 9 may represent an embodiment of a case for N=4. Here, N is a natural number equal to or greater than 1, which may include 2, 3, 4, 5, 6, 7, 8, etc. In addition, N may be a pre-defined value or a value determined by information signaled from a bitstream.

As an example, a latent representation of an input image may be a feature map format that the number of channels is equal to or greater than that of input images and spatial resolution (a height and a width) becomes smaller. As another example, a latent representation of an input image may be a feature map format that the number of channels is equal to or greater than that of input images and spatial resolution (a height and a width) becomes larger.

In the present disclosure, an intermediate latent representation refers to the output of an encoding block used in an encoding process of a neural network-based image encoding method as shown in FIG. 8, and according to an example of an encoding neural network using four encoding blocks, the output of a first encoding block that uses input image x as input may be referred to as first intermediate latent representation l1 and the output of a k-th encoding block that uses previous intermediate latent representation lk-1 (k=2, 3, 4) as input may be referred to as k-th intermediate latent representation lk (k=2, 3, 4). In this case, l4 may be the same as latent expression y. (l4=y).

(2) Latent Representation Quantization

Quantization refers to mapping a value within a specific range to a specific value, which may be used to limit the number of values that may be expressed.

Quantization may be widely divided into uniform quantization and non-uniform quantization, wherein uniform quantization is a case in which all ranges where each value is mapped to a specific value are the same and non-uniform quantization may show a case in which ranges where each value is mapped are different.

In a neural network-based image compression method, a value of components of a latent representation is quantized, and since an encoding neural network guarantees non-linear transform, uniform quantization may be mainly used.

In particular, quantization in neural network-based image compression may be replaced with a process of adding uniform noise between -0.5 and 0.5 instead of quantization (Equation 1) at a training time to ensure that a backpropagation algorithm may be used, and may use a rounding function (Equation 2) at an inference time.

$$\text{Equation 1:} \quad \sim y = y \pm u\left(-\frac{1}{2}, \frac{1}{2}\right)$$

$$\text{Equation 2:} \quad \wedge y = Round(y)$$

Here, ~y may be a latent representation with uniform noise, ^y may be a quantized latent representation, u(a,b) may be uniform distribution with an interval between a and b, and Round(·) may be a typical rounding operation.

(3) Latent Representation Probability Model P(^y) (^y)

In a neural network-based image compression method, the probability distribution of ^y is estimated to entropy encode quantized latent representation ^y, and a neural network-based probability model for estimating this probability distribution is referred to as latent representation probability model P(^y) (^y).

Latent representation probability model P(^y) (^y) may be calculated as in Equation 3 under the assumption that all components ^yi of ^y are an independent random variable.

In this case, since P(^y) (^y) may be calculated by a convolution between P(y) (y) and uniform distribution u(-1/2,1/2), a latent representation probability model may be finally expressed as in Equation 4.

**Equation 3**

$$p_{\tilde{y}}(\tilde{y}) = \prod_i p_{\tilde{y}_i}(\tilde{y}_i)$$

**Equation 4**

$$p_{\hat{y}_i}(\hat{y}_i) = \left(p_{y_i} * u\left(-\tfrac{1}{2}, \tfrac{1}{2}\right)\right)(\hat{y}_i) = \int_{\hat{y}_i - \frac{1}{2}}^{\hat{y}_i + \frac{1}{2}} p_{y_i}(y)dy$$

Here, * may refer to a convolution, and u(a,b) may refer to uniform distribution with an interval of (a, b).

Component unit probability model P(yi) (yi) of a non-quantized latent representation may be predicted through a learnable neural network, and in the present disclosure, this process may be referred to as latent representation probability distribution estimation.

When performing latent representation probability distribution estimation, a distribution parameter ($u_i, \sigma_i$) may be predicted through a learnable neural network (which is referred to as a latent representation probability distribution estimation means in a core configuration of the invention) by assuming that Pyi is Gaussian distribution $N(u_i, \sigma_i)$. In this case, y or ^y may be used as additional input of a neural network to achieve higher prediction performance.

(4) Entropy Encoding and Decoding of Latent Representation

Entropy encoding is an encoding method that uses the probability distribution of a random variable when that probability distribution is known, and may use arithmetic coding or range coding.

Neural network-based image compression methods may perform entropy encoding and entropy decoding on latent representation ^y quantized in an encoder and a decoder, respectively.

In this case, entropy encoding and decoding may be performed based on estimated latent representation probability distribution P(^y) (^y).

Neural network-based image compression is performed through neural networks composed of learnable parameters, and the learning of these neural networks may be performed through a backpropagation algorithm that updates weights of a neural network and a parameter towards minimizing a specific loss function calculated from learning data.

For an image compression model, learning may be performed to simultaneously minimize distortion between an input image and a reconstructed image and a bit rate of a bitstream transmitted from an encoder to a decoder.

In this case, distortion loss function LD may use Mean Square Error (MSE) or Multi-Scale Structural Similarity Index Measure (MS-SSIM) between input image x and reconstructed image ^x as in Equation 6.

In Equation 6, Ex~px($\cdot$) may refer to finding an expected value (an average) for input x of all learning data.

Bit rate loss function LR may be calculated by using Equation 7, and may be referred to as cross-entropy between actual latent representation distribution and latent representation distribution estimated through a latent representation probability model, and in this sense, it may be referred to as an entropy loss function.

Final rate-distortion loss function LRD for learning may be expressed as in Equation 8, wherein constant $\lambda$ is used to determine a rate between distortion loss function LD and entropy loss function LR, and according to $\lambda$, a desired image quality level and bit rate for the output of a learned model may be determined. (Generally, as $\lambda$ is larger, an image quality level is higher.)

x may be an input image data sample to be used for learning, and px may be learning data distribution.

$$\text{Equation 6} \quad L_D = E_{x \sim p_x}(D(x, \hat{x})) \,,$$

$D(\cdot, \cdot)$ is a distortion function

$$\text{Equation 7} \quad L_R = E_{x \sim p_x}\left(-\log p_{\hat{y}}(\hat{y})\right)$$

such as MSE or MS-SSIM

$$\text{Equation 8} \quad L_{RD} = L_R + \lambda \cdot L_D$$

Since a multi-layer feature map is composed of multiple feature maps having different spatial resolution, an encoding method different from when encoding a natural image may be required, and in the present disclosure, a neural network-based image compression method when an input image is multi-layer feature map {Fk}k=1, ..., L (L is the number of layers) is described particularly as a neural network-based multi-layer feature map compression method. As an example, multi-layer feature map {Fk}k=1, ..., L may refer to a feature map of a layer that has greater spatial resolution as k is smaller. As another example, multi-layer feature map {Fk}k=1, ..., L may refer to a feature map of a layer that has smaller spatial resolution as k is smaller.

FIG. 10 shows a process of performing neural network-based multi-layer feature map compression (or encoding/decoding).

A core component of a neural network-based multi-layer feature map compression (or encoding/decoding) method is also an encoding neural network, a decoding neural network, quantization, a latent representation probability model, entropy encoding and decoding, and a process of performing neural network-based multi-layer feature map compression (or encoding/decoding) is described through FIG. 10 and 1)~6).

1) In an encoder, multi-layer feature map {Fk}k=1, ..., L to be encoded may be transformed into latent representation y through an encoding neural network.
2) Each component yi of latent representation y may be quantized.
3) Quantized latent representation ^y may be transmitted to a decoder in a form of a bitstream through entropy encoding based on learnable latent representation probability model P(^y) (^y).
4) A bitstream transmitted from an encoder may be reconstructed to ^y through entropy decoding based on the same latent representation probability model as in an encoder.
5) A decoding neutral network may use ^y as input to reconstruct a multi-layer feature map. In the present disclosure, a reconstructed multi-layer feature map may be indicated as {^Fk}k=1, ..., L.
6) A parameter of a core component may be learned through a loss function and a backpropagation algorithm.

In FIG. 10, a block whose border is indicated by a dotted line may refer to a learnable parameter or neural network.

Neural network-based multi-layer feature map compression is performed through neural networks composed of learnable parameters, and these neural networks are referred to as a neural network-based multi-layer feature map compression model, and the learning of these neural networks may be performed through a backpropagation algorithm that updates weights of a neural network and a parameter towards minimizing a specific loss function calculated from learning data.

When learning a neural network-based multi-layer feature map compression model, a rate-distortion optimization method or a rate-performance optimization method may be used.

A rate-distortion optimization method is to perform learning to simultaneously minimize distortion between an input multi-layer feature map and a reconstructed multi-layer feature map and a bit rate of a bitstream transmitted from an encoder to a decoder.

A rate-performance optimization method is to perform learning to simultaneously minimize machine task performance performed through a reconstructed multi-layer feature map and a bit rate of a bitstream transmitted from an encoder to a decoder.

A distortion loss function used in a neural network-based multi-layer feature map compression model may be used by weighting Mean Square Error (MSE) or Multi-Scale Structural Similarity Index Measure (MS-SSIM) between input multi-layer feature map {Fk}k=1, **...,** L and reconstructed multi-layer feature map {^Fk}k=1, ..., L for weight wk according to each layer, as in Equation 9.

A bit rate may be approximated by cross-entropy between an actual latent representation and the probability distribution of a latent representation estimated by a latent representation probability model, as in Equation 10.

Machine task loss function LP refers to machine task performance performed from a compressed and reconstructed multi-layer feature map, which may be calculated through a comparison between a correct label and an inference result of a machine task.

In this case, a classification loss function, a bounding box loss function, a mask loss function, etc. may be used according to a machine task type.

Loss function LRD for rate-distortion optimization may be expressed as in Equation 11, wherein constant $\lambda$ is used to determine a rate between distortion loss function LD and cross entropy-based loss function LR, and according to $\lambda$, a desired reconstruction level and bit rate for the output of a learned model may be determined. (Generally, as $\lambda$ is larger, a reconstruction level is higher.)

Loss function LRP for rate-performance optimization may be expressed as in Equation 12, wherein constant $\lambda$ is used to determine a rate between performance loss function LP and cross entropy-based loss function LR, and according to $\lambda$, a desired reconstruction level and bit rate for the output of a learned model may be determined. (Generally, as $\lambda$ is larger, machine task performance is higher.)

$$\text{Equation 9} \quad L_D = E_{x \sim p_x}\left( \sum_{k=1,\dots,L} w_k \times D(F_k, \hat{F}_k) \right).$$

$D(\cdot, \cdot)$ is a distortion function such as MSE or MS-SSIM

$$\text{Equation 10 } L_R = E_{x \sim p_x}\left(- \log p_{\hat{y}}(\hat{y})\right)$$

$$\text{Equation 11 } L = L_R + \lambda \times L_D$$

$$\text{Equation 12 } L = L_R + \lambda \times L_P$$

For multi-layer feature map encoding, L multi-layer feature maps may be encoded independently or may be made into one fusion feature map and encoded. However, for the former, there is a problem of increased complexity due to parallel encoding L times, and for the latter, there is a problem of increased complexity due to the serial execution of a fusion process and a latent representation extraction process and a disadvantage of not being able to sufficiently utilize a sequential attribute between layers.

The present disclosure relates to a neural network-based multi-layer feature map compression method including a multi-layer feature map sequential fusion encoding or multi-layer feature map sequential fusion decoding process. As a multi-layer feature map fusion process and a latent representation extraction process are sequentially processed as one process through the sequential fusion encoding or decoding of the present disclosure, complexity may be reduced, and through the sequential attribute utilization of a multi-layer feature map, compression performance may be improved.

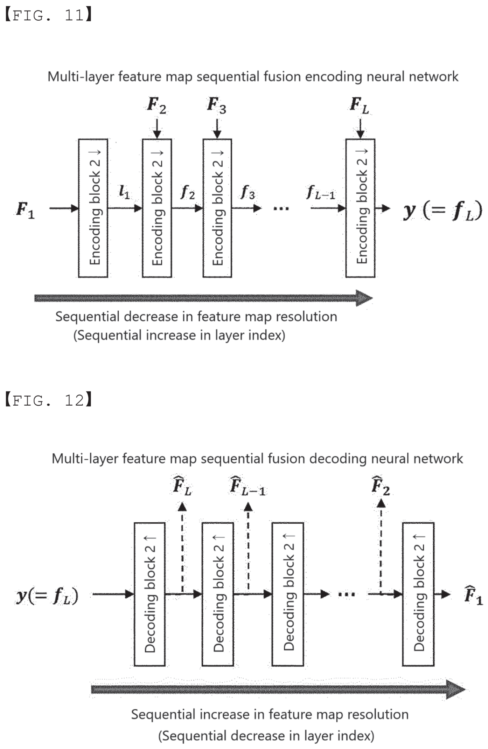

FIG. 11 shows a multi-layer feature map sequential fusion encoding neural network, which is an example of an encoding neural network of FIG. 10.

Referring to FIG. 11, a multi-layer feature map sequential fusion encoding neural network for performing multi-layer feature map sequential fusion encoding may be an encoding neural network that sequentially generates fusion latent representations fk through consecutive encoding blocks to effectively encode multi-layer feature map {Fk}k=1, ..., L and finally outputs fusion latent representation y of a single layer for a multi-layer feature map.

In this case, sequential encoding may mean that layer index k of a fusion latent representation increases or decreases by one whenever it passes through each encoding block.

In particular, a structure of FIG. 10 may be an example in which layer index k of a fusion latent representation or an intermediate latent representation increases by one.

Fusion latent representation fk may refer to the output of an encoding block that uses as additional input intermediate latent representation lk-1 (or fusion latent representation fk-1, which is the output of a previous encoding block, and encoding target feature map Fk with the same spatial resolution as it in an encoding neural network for multi-layer feature map encoding. In the process, only a case was described in which an intermediate latent representation and a target feature map have the same resolution, but the process may be applied by adding only a process of transforming resolution equally even when resolution is different. As an example, when the resolution of intermediate latent representation lk-1 and the resolution of encoding target feature map Fk are different, the process may be performed by changing the resolution of one of the two to make the resolution of intermediate latent representation lk-1 the same as that of encoding target feature map Fk.

In this case, a concatenation between channels may be used to use lk-1 (or fk-1) and Fk as input of one encoding block.

This fusion latent representation may include fused information for a different layer of a multi-layer feature map.

A special feature of multi-layer feature map sequential fusion encoding includes that it may minimize duplication between layers of a multi-layer feature map to improve encoding performance since encoding is performed as a single fusion latent representation for a feature map of all layers and that it may achieve high encoding performance without a significant increase in complexity compared to an existing neural network-based natural image compression method since the information of a feature map of all layers is fused through a fusion latent representation although a feature map of all layers is encoded.

Multi-layer feature map {Fk}k=1, ..., L input to an encoding neural network of the present disclosure may be a result value after performing an additional preprocessing step. In this case, preprocessing may include a filtering process according to resolution, a process of transforming resolution, etc.

FIG. 12 shows a multi-layer feature map sequential fusion decoding neural network, which is an example of a decoding neural network of FIG. 10.

A multi-layer feature map sequential fusion decoding neural network for performing multi-layer feature map sequential fusion decoding may be a decoding neural network that sequentially decodes multi-layer feature map {^Fk}k=1, ..., L through consecutive decoding blocks from fusion latent representation y of a single layer for a multi-layer feature map as in FIG. 12 in order to effectively decode a multi-layer feature map.

In this case, sequential decoding may mean that layer index k of a reconstructed multi-layer feature map increases or decreases by one whenever it passes through each decoding block.

In particular, a structure of FIG. 11 may be an embodiment of a case in which layer index k of a reconstructed multi-layer feature map decreases by one.

A single fusion latent representation for a multi-layer feature map may be quantized for entropy encoding and decoding (i.e., ^y).

A multi-layer feature map sequential fusion decoding neural network may sequentially reconstruct feature map ^FL of a layer with the lowest resolution to feature map ^F1 of a layer with the highest resolution by using y as input.

In this case, the output of a k-th decoding block is a decoding target ^FL-K+1, which may be characterized as being the input of a next decoding block at the same time.

Feature map ^Fk decoded through a decoding block may become final reconstructed feature map {^Fk}k=1, ..., L as it is, but it may go through additional postprocessing. In this case, postprocessing may include a filtering process according to resolution, a process of transforming resolution, etc.

A special feature of multi-layer feature map sequential fusion decoding includes that it may minimize duplication between layers of a multi-layer feature map to improve encoding performance since decoding is performed as a single fusion latent representation for a feature map of all layers and that it may achieve high encoding performance without a significant increase in complexity compared to a decoding neural network in an existing neural network-based natural image compression method due to a simple structure that the output of a previous decoding block is used as the input of a next decoding block although a feature map of all layers is decoded.

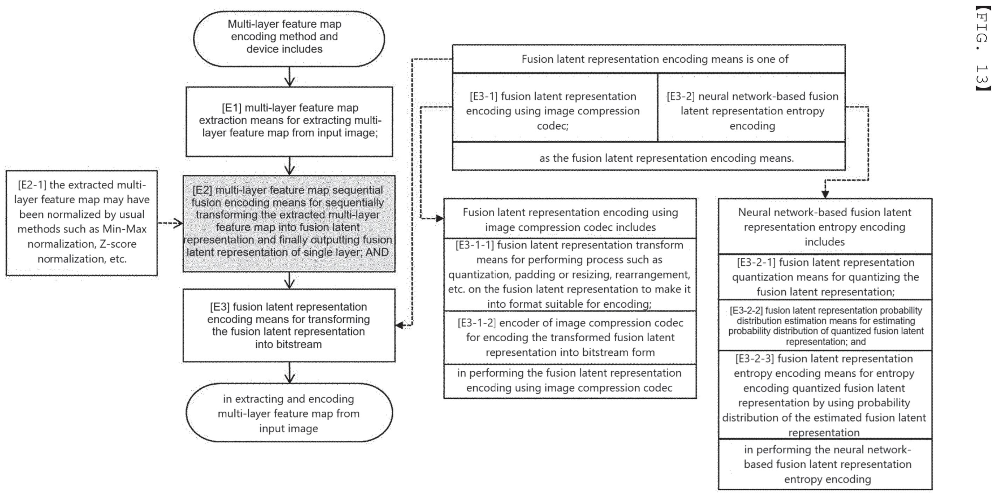

FIG. 13 shows a multi-layer feature map encoding method.

A multi-layer feature map encoding method and device in FIG. 13 may include a multi-layer feature map extraction means [E1] for extracting a multi-layer feature map from an input image, a multi-layer feature map sequential fusion encoding means [E2] for sequentially transforming the extracted multi-layer feature map into a fusion latent representation and finally outputting a fusion latent representation of a single layer and a fusion latent representation encoding means [E3] for transforming the fusion latent representation into a bitstream.

Here, the extracted multi-layer feature map may have been normalized by an usual method such as Min-Max normalization, Z-score normalization, etc. [E2-1].

A fusion latent representation encoding means may be one of fusion latent representation encoding using an image compression codec [E3-1] and fusion latent representation entropy encoding based on a neural network [E3-2].

Fusion latent representation encoding using an image compression codec [E3-1] may include a fusion latent representation transform means [E3-1-1] for performing a process such as quantization, padding or resizing, rearrangement, etc. on a fusion latent representation to make it into a format suitable for encoding and an encoding means of an image compression codec [E3-1-2] for encoding a transformed fusion latent representation in a form of a bitstream.

A neural network-based fusion latent representation entropy encoding [E3-2] may include a fusion latent representation quantization means [E3-2-1] for quantizing a fusion latent representation, a fusion latent representation probability distribution estimation means [E3-2-2] for estimating the probability distribution of a quantized fusion latent representation and a fusion latent representation entropy encoding means [E3-2-3] for entropy encoding a quantized fusion latent representation by using the estimated probability distribution of a fusion latent representation.

As a method for applying a multi-layer feature map sequential fusion encoding means in [E2] of FIG. 13 to a video, a temporal context may be utilized through a method [E2-2] for utilizing a multi-layer feature map decoded temporally earlier than a current encoding target multi-layer feature.

A method [E2-2] for utilizing a multi-layer feature map decoded temporally earlier may be one of a method [E2-2-1] for extracting a multi-layer temporal context based on a multi-layer feature map decoded temporally earlier and a method [E2-2-2] for directly utilizing a multi-layer feature map decoded temporally earlier.

A method [E2-2-1] for extracting a multi-layer temporal context may be one of a multi-layer temporal context extraction means using motion information [E2-2-1-1], a multi-layer temporal context extraction means not using motion information [E2-2-1-2] and a multi-layer temporal context extraction means using a deformable convolutional neural network [E2-2-1-3].

A multi-layer temporal context extraction means using motion information [E2-2-1-1] may include a motion vector extraction means [E2-2-1-1-1] for extracting motion information between a previously decoded multi-layer feature map and a current encoding target multi-layer feature map, a motion vector encoding means [E2-2-1-1-2] for outputting a latent representation of an extracted motion vector, a motion latent representation encoding means [E2-2-1-1-3] for transforming a motion latent representation into a bitstream, a motion latent representation decoding means [E2-2-1-1-4] for decoding a motion latent representation from a bitstream, a motion vector decoding means [E2-2-1-1-5] for decoding a motion vector from a motion latent representation, and a motion compensation means [E2-2-1-1-6] for predicting a multi-layer feature map of a current frame based on a decoded motion vector and a previously decoded multi-layer feature map.

A multi-layer temporal context extraction means using a deformable convolutional neural network [E2-2-1-3] may include an offset extraction means [E2-2-1-3-1] for extracting an offset of a deformable convolutional neural network by using a previously decoded multi-layer feature map and a current encoding multi-layer feature map, an offsetting means [E2-2-1-3-2] for outputting a latent representation of an extracted offset, an offset latent representation encoding means [E2-2-1-3-3] for transforming an offset latent representation into a bitstream, an offset latent representation decoding means [E2-2-1-3-4] for decoding an offset latent representation from a bitstream, an offset decoding means [E2-2-1-3-5] for decoding an offset vector from an offset latent representation and a deformable convolutional neural network [E2-2-1-3-6] for predicting a multi-layer feature map of a current frame based on a decoded offset and a previously decoded multi-layer.

As neural network-based fusion latent representation entropy encoding [E3-2] is a method for applying a neural network-based fusion latent representation entropy encoding means to a video, it may utilize a temporal context through a method [E2-2] for utilizing a multi-layer feature map decoded temporally earlier than a current encoding target multi-layer feature map.

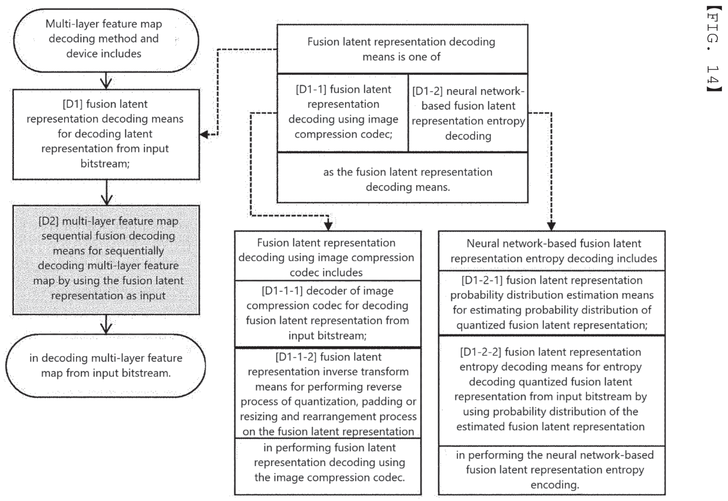

FIG. 14 shows a multi-layer feature map decoding method.

A method and a device for decoding a multi-layer feature map from an input bitstream may include a fusion latent representation decoding means [D1] for decoding a latent representation from an input bitstream and a multi-layer feature map sequential fusion decoding means [D2] for sequentially decoding a multi-layer feature map by using the fusion latent representation as input.

A fusion latent representation decoding means may be at least one of fusion latent representation decoding using an image compression codec [D1-1] and neural network-based fusion latent representation entropy decoding [D1-2].

Fusion latent representation decoding using an image compression codec may include a decoding means of an image compression codec [D1-1-1] for decoding a fusion latent representation from an input bitstream and a fusion latent representation inverse transform means [D1-1-2] for performing a reverse process of a quantization, padding or resizing and rearrangement process on a fusion latent representation.

Neural network-based fusion latent representation entropy encoding may include a fusion latent representation probability distribution estimation means [D1-2-1] for estimating the probability distribution of a quantized fusion latent representation and a fusion latent representation entropy decoding means [D1-2-2] for entropy decoding a quantized fusion latent representation from an input bitstream by using the estimated probability distribution of a fusion latent representation.

A method for applying a neural network-based fusion latent representation entropy decoding means [D1-2] to a video may utilize a temporal context through a method [D2-1] for utilizing a multi-layer feature map decoded temporally earlier than a current decoding target multi-layer feature map.

A method [D2-1] for utilizing a previously decoded multi-layer feature map may be one of a method [D2-1-1] for extracting a multi-layer temporal context based on a previously decoded multi-layer feature map and a method [D2-1-2] for directly utilizing a previously decoded multi-layer feature map.

A multi-layer temporal context extraction means [D2-1-1] may be one of a multi-layer temporal context extraction means using motion information [D2-1-1-1], a multi-layer temporal context extraction means not using motion information [D2-1-1-2] and a multi-layer temporal context extraction means using a deformable convolutional neural network [D2-1-1-3].

A method for performing temporal context extraction using motion information may include a motion latent representation decoding means [D2-1-1-1-1] for decoding a motion latent representation from a bitstream, a motion vector decoding means [D2-1-1-1-2] for decoding a motion vector from a motion latent representation and a motion compensation means [D2-1-1-1-3] for predicting a multi-layer feature map of a current frame based on a motion vector and a previously decoded multi-layer feature map.

A method for performing temporal context extraction using a deformable convolutional neural network may include an offset latent representation decoding means [D2-1-1-3-1] for decoding an offset latent representation from a bitstream, an offset decoding means [D2-1-1-3-2] for decoding an offset vector from an offset latent representation and a deformable convolutional neural network [D2-1-1-3-3] for predicting a multi-layer feature map of a current frame based on a decoded offset and a previously decoded multi-layer feature map.

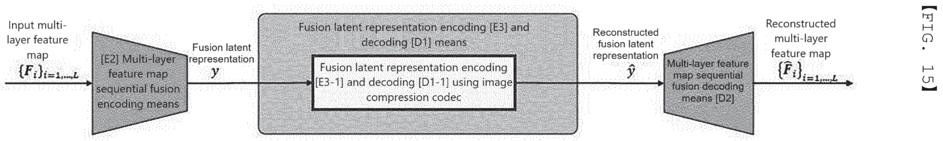

FIG. 15 shows a first embodiment at a high level of a multi-layer feature map encoding and decoding system using a component of the present disclosure.

As a first embodiment, fusion latent representation encoding [E3-1] and decoding [D1-1] using an image compression codec may be used as a fusion latent representation encoding means [E3] and decoding means [D1]. A description of each detailed component will be described in more detail through the following embodiments.

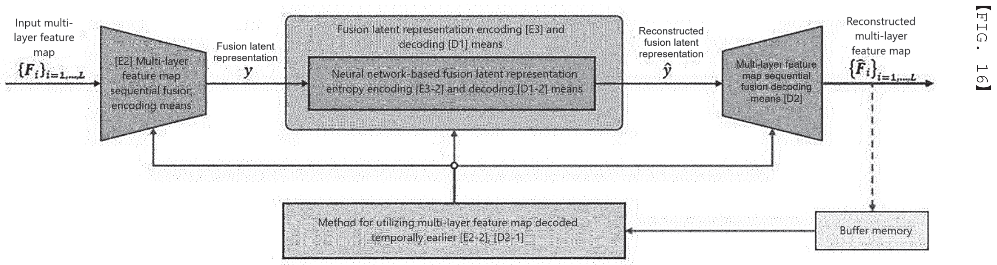

FIG. 16 shows a second embodiment at a high level of a multi-layer feature map encoding and decoding system using a component of the present disclosure.

As a second embodiment, neural network-based fusion latent representation entropy encoding [E3-2] and decoding [D1-2] may be used as a fusion latent representation encoding means [E3] and decoding means [D1]. A description of each detailed component will be described in more detail through the following embodiments.

When fusion latent representation entropy encoding and decoding is performed based on a neural network, a multi-layer feature map that is decoded temporally earlier may be utilized. A method ([E2-2], [D2-1]) for utilizing a multi-layer feature map decoded temporally earlier may be used as a method for applying a multi-layer feature map sequential fusion encoding means [E2] and decoding means [D2] and a neural network-based fusion latent representation entropy encoding means [E3-2] and decoding means [D1-2] to a video.

Encoding and decoding image quality or bit rate of a neural network model is determined by using parameter A as in Equation 11 or Equation 12 above, and when this A is a value lower than a specific threshold, a multi-layer feature map decoded temporally earlier may be utilized, and when this A is a value higher than a threshold, a switching method that does not utilize a multi-layer feature map decoded temporally earlier may be used. In this case, a specific threshold may use a fixed value that is determined in advance, or it may be adaptively determined and used according to a task type, an input feature map extraction means, or an input image or feature map.

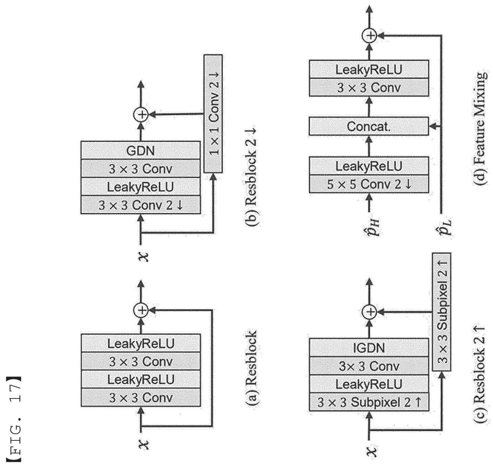

FIG. 17 shows detailed implementation of a neural network block used in this embodiment.

A neural network block of the present disclosure may be expressed as an encoding block in an encoding neural network and a decoding block in a decoding neural network.

In this embodiment, an embodiment of the present disclosure is described by taking as an example a case in which multi-layer feature map $\{Fk\}k=1, ..., L$ is particularly P layer feature map $\{Pk\}k=2, ..., 5$. In addition, the detailed implementation of a neural network block used in this embodiment may be described by referring to FIG. 17.

For Mask R-CNN, a P6 layer in a P layer may not be compressed. This is because due to a very high correlation with a P5 layer, there is no difference in machine task performance even if P5 downsampling is used instead of P6.

In FIG. 17, a n X n Conv block may refer to a convolutional neural network layer using a n X n-sized kernel.

In FIG. 17, a n X n subpixel block may refer to a sub-pixel convolution layer using a n X n-sized kernel proposed in Wenzhe Shi et. al., "Real-Time Single Image and Video Super-Resolution Using an Efficient Sub-Pixel Convolutional Neural Network"; Proceedings of the IEEE Conference on Computer Vision and Pattern Recognition (CVPR), 2016, pp. 1874-1883.

In FIG. 17, LeakyReLU may refer to a LeakyReLU nonlinear layer usually used in a neural network for image processing.

In FIG. 17, GDN and IGDN refer to a nonlinear layer proposed in J.Balle, et.al., "Density modeling of ' images using a generalized normalization transformation," arXiv preprint arXiv:1511.06281, 2015., which may be usually in a neural network-based image compression method.

In FIG. 17, ^PH and ^PL refer to a feature map of two adjacent layers among the layers of a multi-layer feature map, and in this case, ^PH may refer to a feature map with relatively higher spatial resolution and ^PL may refer to a feature map with relatively lower spatial resolution.

In FIG. 17, + may refer to element-wise addition for two feature maps, and Concat may refer to concatenation between channels.

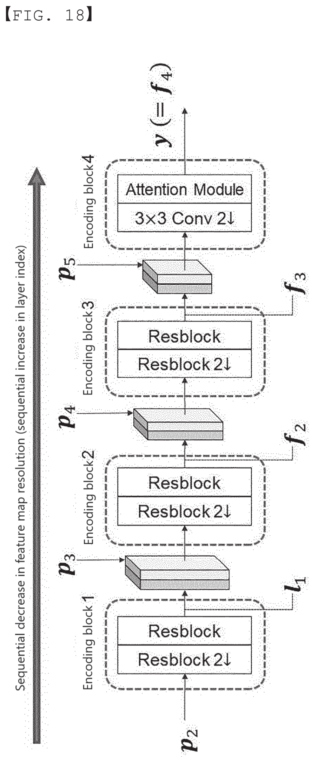

FIG. 18 shows a first embodiment of a multi-layer feature map sequential fusion encoding neural network, which is a multi-layer feature map sequential fusion encoding means.

A first embodiment of FIG. 18 may be an embodiment of a case in which a layer index of a fusion latent representation or an intermediate latent representation sequentially increases (the number of layers, N = 4) when a multi-layer feature map is transformed sequentially into a fusion latent representation.

In a first embodiment of FIG. 18, P layer feature map $\{Pk\}k=2, ..., 5$ may be used as input to sequentially encode a multi-layer feature map into a fusion latent representation, outputting final fusion latent representation y.

A first embodiment of FIG. 18 may be an embodiment of Step [E2] in FIG. 13.

Encoding block 1, which uses P2 as input, is composed of Resblock and Resblock $2_\downarrow$, and may output I1, which is an intermediate latent representation.

Encoding block 2, which uses P3 and I1 as input, is also composed of Resblock and Resblock $2_\downarrow$, and may output f2, which is a fusion latent representation.

Encoding block 3, which uses P4 and f2 as input, is also composed of Resblock and Resblock $2_\downarrow$, and may output f3, which is a fusion latent representation.

Finally, encoding block 4, which uses P5 and f3 as input, is composed of 3x3 convolutional neural network layer ($2_\downarrow$ and an attention module, and may output y (=f4), which is a final fusion latent representation.

Attention Module may refer to an attention module proposed in Z.Cheng et.al., "Learned image compression with discretized gaussian mixture likelihoods and attention modules," in Proceedings of the IEEE/CVF Conference on Computer Vision and Pattern Recognition, 2020, pp.7939-7948.

In this case, other than an encoding block in this embodiment, usual neural network-based encoding blocks for image processing may be combined and used.

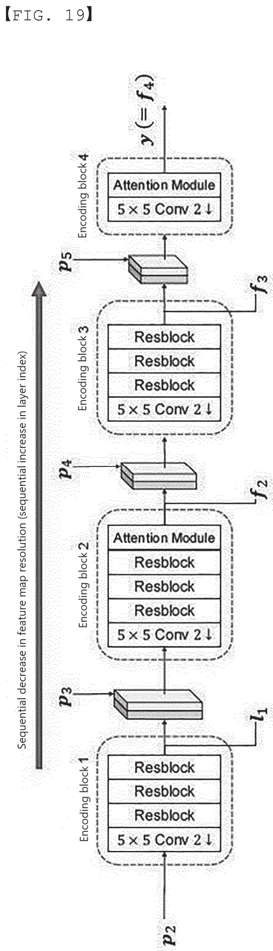

FIG. 19 shows a second embodiment of a multi-layer feature map sequential fusion encoding neural network, which is a multi-layer feature map sequential fusion encoding means.

A second embodiment in FIG. 19 may be an embodiment of a case in which a layer index of a fusion latent representation or an intermediate latent representation sequentially increases (the number of layers, N = 4) when a multi-layer feature map is transformed sequentially into a fusion latent representation.

Referring to FIG. 19, it may be confirmed that an additional embodiment of a multi-layer feature map sequential fusion encoding means having a structure similar to previous embodiments is shown, and P layer feature map $\{Pk\}k=2, ..., 5$ may be used as input to sequentially encode a multi-layer feature map into a fusion latent representation, outputting final fusion latent representation y.

Encoding block 1, which uses P2 as input, is composed of one 5x5 convolutional neural network layer ($2_{\downarrow}$ and three Resblocks, and may output l1, which is an intermediate latent representation.

Encoding block 2, which uses P3 and l1 as input, is also composed of one 5x5 convolutional neural network layer ($2_{\downarrow}$, three Resblocks and one attention module, and may output f2, which is a fusion latent representation.

Encoding block 3, which uses P4 and f2 as input, is also composed of one 5x5 convolutional neural network layer ($2_{\downarrow}$ and three Resblocks, and may output f3, which is a fusion latent representation.

Finally encoding block 4, which uses P5 and f3 as input, is composed of a 5x5 convolutional neural network layer ($2_{\downarrow}$ and an attention module, and may output y (= f4), which is a final fusion latent representation.

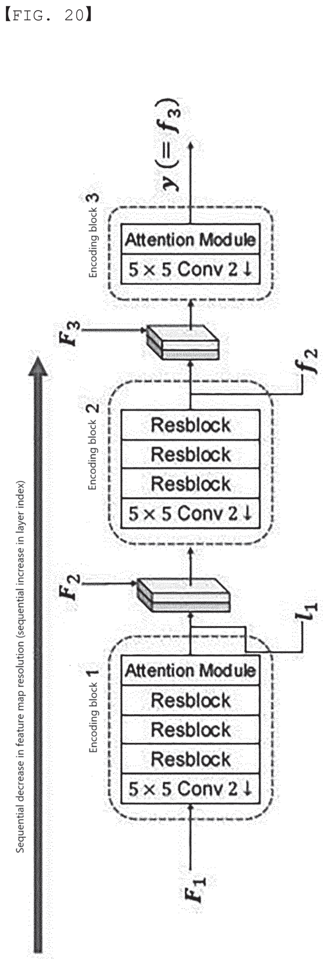

FIG. 20 shows a third embodiment of a multi-layer feature map sequential fusion encoding neural network, which is a multi-layer feature map sequential fusion encoding means.

A third embodiment in FIG. 20 may be an embodiment of a case in which a layer index of a fusion latent representation or an intermediate latent representation sequentially increases (the number of layers, N = 3) when a multi-layer feature map is transformed sequentially into a fusion latent representation.

Referring to FIG. 20, an additional embodiment of a multi-layer feature map sequential fusion encoding means having a structure similar to previous embodiments may be confirmed. A case in which Darknet 53 is used as a feature extractor as in a YOLO v3 model may be used an example. In other words, it may be an embodiment of a case in which the number of layers of encoding target feature map $\{Fk\}k=1, ..., 3$ is 3.

In this case, as in FIG. 20, a multi-layer feature map sequential fusion encoding means may be composed of three encoding blocks.

Encoding block 1, which uses F1 as input, is composed of one 5x5 convolutional neural network layer ($2_{\downarrow}$), three Resblocks and one attention module, and may output l1, which is an intermediate latent representation.

Encoding block 2, which uses F2 and l1 as input, is composed of one 5x5 convolutional neural network layer ($2_{\downarrow}$) and three Resblocks, and may output f2, which is a fusion latent representation.

Encoding block 3, which uses F3 and f2 as input, is composed of a 5x5 convolutional neural network layer $2_{\downarrow}$ and an attention module, and may output y (= f3), which is a final fusion latent representation.

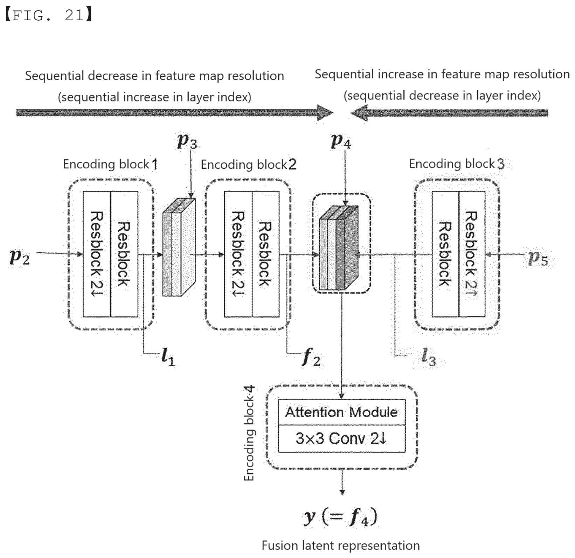

FIG. 21 shows a fourth embodiment of a multi-layer feature map sequential fusion encoding neural network, which is a multi-layer feature map sequential fusion encoding means.

A third embodiment in FIG. 21 may an embodiment of a case in which a structure where a layer index of a fusion latent representation or an intermediate latent representation sequentially increases and a structure where a layer index of a fusion latent representation or an intermediate latent representation sequentially decreases are combined when a multi-layer feature map is transformed sequentially into a fusion latent representation.

A fourth embodiment in FIG. 21 may show that the spatial resolution of a final fusion latent representation may be made variable by configuring the encoding order of encoding blocks and the spatial resolution of an intermediate latent representation and a fusion latent representation in various ways when a multi-layer feature map is transformed sequentially into a fusion latent representation.

A fourth embodiment in FIG. 21 may be an embodiment of Step [E2] in FIG. 13.

Encoding block 1, which uses P2 as input, is composed of Relock and Resblock $2_{\downarrow}$, and may output l1, which is an intermediate latent representation.

Encoding block 2, which uses P3 and l1 as input, is also composed of Resblock and Resblock $2_{\downarrow}$, and may output f2, which is a fusion latent representation.

Encoding block 3, which uses P4 as input, is composed of Resblock and Resblock $2_{\uparrow}$, and may output l3, which is an intermediate latent representation.

Encoding block 4, which uses all of P4, f2 and l3 as input, is composed of a 3xe convolutional neural network layer ($2_{\downarrow}$ and an attention module, and may output y (=f4), which is a final fusion latent representation.

Final fusion latent representation y (=f4) in this additional embodiment may have higher spatial resolution than a first embodiment.

This feature has an additional advantage that encoding performance may be optimized by adjusting the spatial resolution of a final fusion latent representation according to a characteristic of a multi-layer feature map to be encoded.

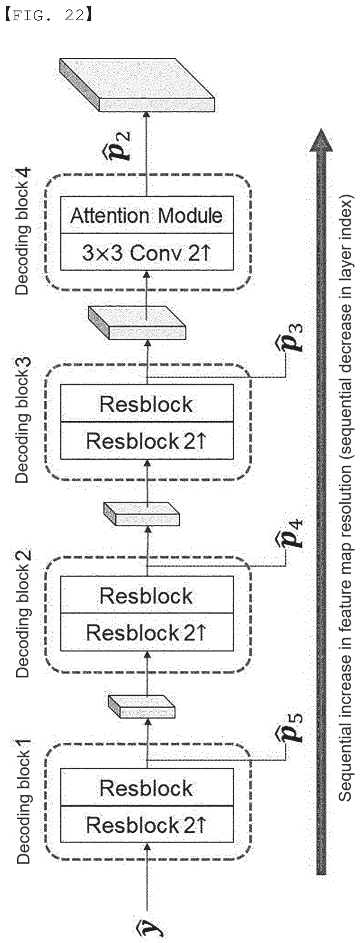

FIG. 22 shows a first embodiment of a multi-layer feature map sequential fusion decoding neural network, which is a multi-layer feature map sequential fusion decoding means.

A first embodiment of FIG. 22 may be an embodiment of a case in which a layer index of a multi-layer feature map reconstructed decreases sequentially when a multi-layer feature map is sequentially decoded.

In a first embodiment of FIG. 22, a P-layer feature map may be sequentially decoded by using fusion latent representation ^y as input. As a result, reconstructed P-layer feature map {^Pk}k=2, ..., 5 may be output.

A first embodiment in FIG. 22 may be an embodiment of Step [D2] in FIG. 14.

Decoding block 1, which uses quantized fusion latent representation ^y as input, is composed of Resblock and Resblock 2↑, and may output feature map ^P5 having the smallest resolution among the feature maps of a P layer feature map.

Decoding block 2, which uses ^P5 as input, is also composed of Resblock and Resblock 2↑, and may output P layer feature map ^P4.

Decoding block 3, which uses ^P4 as input, is also composed of Resblock and Resblock 2↑, and may output P layer feature map ^P3.

Finally, decoding block 4, which uses ^P3 as input, is composed of a 3x3 convolutional neural network layer (2↑) and an attention module, and may output feature map ^P2 having the largest resolution among the feature maps of a P layer feature map.

Attention Module may refer to an attention module proposed in Z.Cheng et.al., "Learned image compression with discretized gaussian mixture likelihoods and attention modules," in Proceedings of the IEEE/CVF Conference on Computer Vision and Pattern Recognition, 2020, pp.7939-7948.

In this case, other than a decoding block in this embodiment, usual neural network-based decoding blocks for image processing may be combined and used.

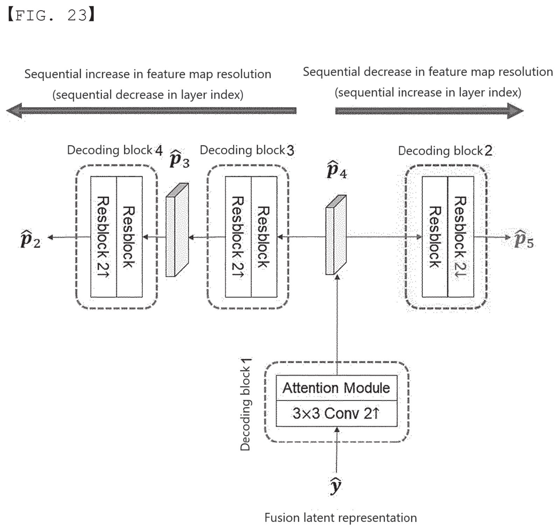

FIG. 23 shows a second embodiment of a multi-layer feature map sequential fusion decoding neural network, which is a multi-layer feature map sequential fusion decoding means.

A second embodiment of FIG. 23 may be an embodiment of a case in which a structure where a layer index of a multi-layer feature map reconstructed increases sequentially when a multi-layer feature map is sequentially decoded and a structure where a layer index of a multi-layer feature map reconstructed decreases sequentially when a multi-layer feature map is sequentially decoded are combined.

A second embodiment of FIG. 23 shows that by configuring the decoding order of decoding blocks in various ways when sequentially reconstructing a multi-layer feature map, encoding performance may be optimized according to a characteristic of a multi-layer feature map to be encoded.

A second embodiment in FIG. 21 may be an embodiment of Step [D2] in FIG. 14.

Decoding block 1, which uses quantized fusion latent representation ^y as input, is composed of a 3x3 convolutional neural network layer (2↑) and an attention module, and may output P layer feature map ^P4.

Decoding block 2, which uses ^P4 as input, is composed of Resblock and Resblock 2↑, and may output P layer feature map ^P5.

Decoding block 3, which uses ^P4 as input, is composed of Resblock and Resblock 2↑, and may output P layer feature map ^P3.

Decoding block 4, which uses ^P3 as input, is also composed of Resblock and Resblock 2↑, and may output P layer feature map ^P2.

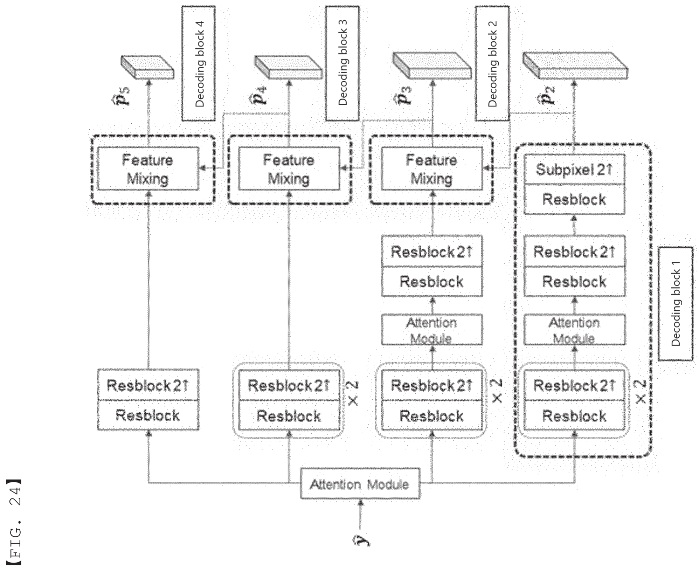

FIG. 24 shows a third embodiment of a multi-layer feature map sequential fusion decoding neural network, which is a multi-layer feature map sequential fusion decoding means.

A third embodiment of FIG. 24 may be an embodiment of a case in which a layer index of a multi-layer feature map reconstructed increases sequentially when a multi-layer feature map is sequentially decoded.

A third embodiment in FIG. 24 may be an embodiment of Step [D2] in FIG. 14.

A third embodiment in FIG. 24 may show that when a multi-layer feature map is sequentially decoded, other than the output of a previous decoding block, it may have additional input as input to decoding block 2, decoding block 3 and decoding block 4.

Decoding block 1, which uses quantized fusion latent representation ^y as input, is composed of Resblock, Resblock 2↑, Resblock, Resblock 2↑, Attention Module, Resblock, Resblock 2↑, Resblock and Subpixel2↑ block, and may output P layer feature map ^P2.

Decoding block 2, which uses ^P2, output of decoding block 1, as input, is composed of feature mixing blocks, and may output P layer feature map ^P3.

Decoding block 2 may use as additional input a feature map extracted through a series of neural network blocks composed of Resblock, Resblock 2↑, Resblock, Resblock 2↑, Attention Module, Resblock and Resblock 2↑ from fusion latent representation ^y.

Decoding block 3, which uses ^P3, output of decoding block 2, as input, is composed of feature mixing blocks, and may output P layer feature map ^P4.

Decoding block 3 may use as additional input a feature map extracted through a series of neural network blocks composed of Resblock, Resblock 2↑, Resblock and Resblock 2↑ from fusion latent representation ^y.

Decoding block 4, which uses ^P4, output of decoding block 3, as input, is composed of feature mixing blocks, and may output P layer feature map ^P5.

Decoding block 4 may use as additional input a feature map extracted through a series of neural network blocks composed of Resblock and Resblock $2_\uparrow$ from fusion latent representation ^y.

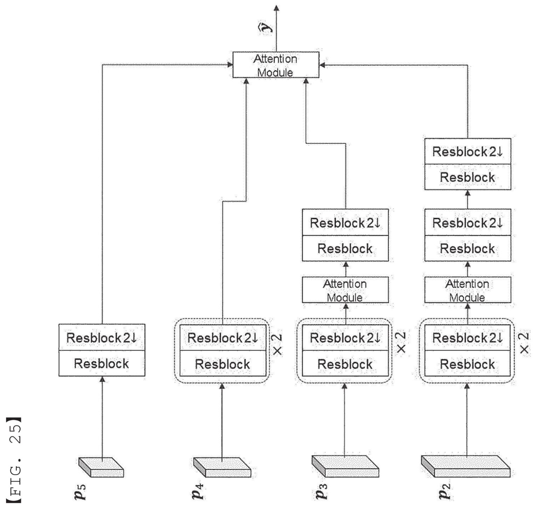

FIG. 25 shows an example of multi-layer feature map general encoding that may be used with multi-layer sequential fusion decoding in the present disclosure.

The multi-layer feature map sequential fusion encoding and decoding of the present disclosure may not be necessarily used together. As an example, the sequential fusion decoding of the present disclosure may be used together with multi-layer feature map general encoding as in FIG. 25. As another example, the sequential fusion encoding of the present disclosure may be used together with multi-layer feature map general decoding.

Even if a multi-layer feature map sequential fusion encoding method is used for multi-layer feature map encoding, it is not necessary to reconstruct a multi-layer feature map through multi-layer feature map sequential fusion decoding, and a multi-layer feature map general decoding method may be used to reconstruct a multi-layer feature map.

Similarly, even if another combination of encoding blocks is used for multi-layer feature map encoding as in FIG. 25 (a multi-layer feature map general encoding method), if final output thereof may be expressed in a single layer feature map format, a multi-layer feature map may be reconstructed through multi-layer feature map sequential fusion decoding therefrom.

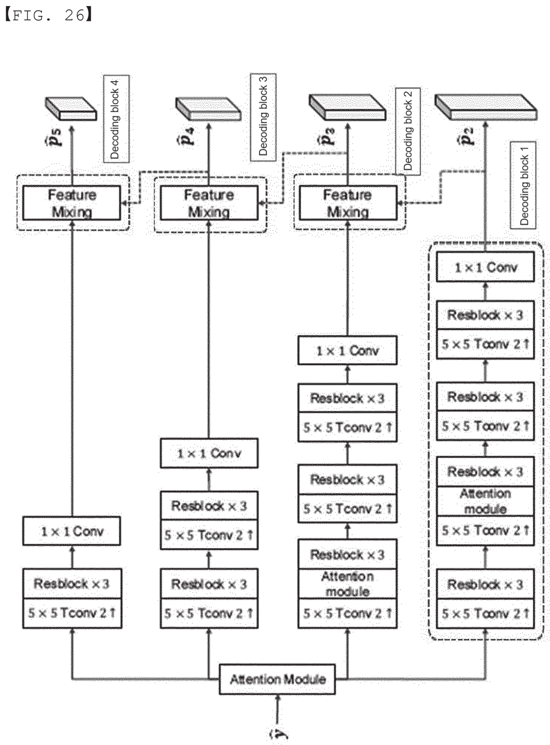

FIG. 26 shows a fourth embodiment of a multi-layer feature map sequential fusion decoding neural network, which is a multi-layer feature map sequential fusion decoding means.

A fourth embodiment in FIG. 26 may be an embodiment of a case in which a layer index of a multi-layer feature map reconstructed increases sequentially when a multi-layer feature map is sequentially decoded.

A fourth embodiment in FIG. 26 may be an embodiment of Step [D2] in FIG. 14.

A fourth embodiment in FIG. 26 may show that when a multi-layer feature map is sequentially decoded, other than the output of a previous decoding block, it may have additional input as input to decoding block 2, decoding block 3 and decoding block 4.

Decoding block 1, which uses quantized fusion latent representation ^y as input, is composed of combinations of 5x5 Tconv $2_\uparrow$, Resblock, Attention Module and 1x1 Conv blocks, and may output P layer feature map ^P2.

Decoding block 2, which uses ^P2, output of decoding block 1, as input, is composed of feature mixing blocks, and may output P layer feature map ^P3.

Decoding block 2 may use as additional input a feature map extracted through a series of neural network blocks composed of combinations of 5x5 Tconv $2_\uparrow$, Resblock, Attention Module and 1x1 Conv blocks from fusion latent representation ^y.

Decoding block 3, which uses ^P3, output of decoding block 2, as input, is composed of feature mixing blocks, and may output P layer feature map ^P4.

Decoding block 3 may use as additional input a feature map extracted through a series of neural network blocks composed of combinations of 5x5 Tconv $2_\uparrow$, Resblock and 1x1 Conv blocks from fusion latent representation ^y.

Decoding block 4, which uses ^P4, output of decoding block 3, as input, is composed of feature mixing blocks, and may output P layer feature map ^P5.

Decoding block 4 may use as additional input a feature map extracted through a series of neural network blocks composed of combinations of 5x5 Tconv $2_\uparrow$, Resblock and 1x1 Conv blocks from fusion latent representation ^y.

A TConv block may refer to an usual transposed convolution layer.

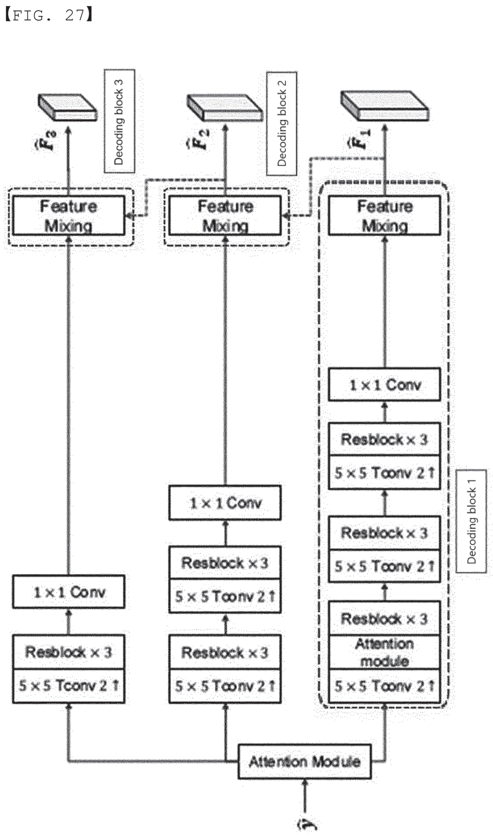

FIG. 27 shows a fifth embodiment of a multi-layer feature map sequential fusion decoding neural network, which is a multi-layer feature map sequential fusion decoding means.

A fifth embodiment in FIG. 27 may be an embodiment of a case in which a layer index of a multi-layer feature map reconstructed increases sequentially when a multi-layer feature map is sequentially decoded.

A fifth embodiment in FIG. 27 may be an embodiment of Step [D2] in FIG. 14.

A fifth embodiment in FIG. 27 may show that when a multi-layer feature map is sequentially decoded, other than the output of a previous decoding block, it may have additional input as input to decoding block 2 and decoding block 3. (Number of Layers N = 3)

Decoding block 1, which uses quantized fusion latent representation ^y as input, is composed of combinations of 5x5 Tconv $2_\uparrow$, Resblock, Attention Module and 1x1 Conv blocks, and may output multi-layer feature map ^F1.

Decoding block 2, which uses ^F1, output of decoding block 1, as input, is composed of feature mixing blocks, and may output multi-layer feature map ^F2.

Decoding block 2 may use as additional input a feature map extracted through a series of neural network blocks composed of combinations of 5x5 Tconv $2_\uparrow$, Resblock and 1x1 Conv blocks from fusion latent representation ^y.

Decoding block 3, which uses ^F2, output of decoding block 2, as input, is composed of feature mixing blocks, and may output multi-layer feature map ^F3.

Decoding block 3 may use as additional input a feature map extracted through a series of neural network blocks composed of combinations of 5x5 Tconv $2_\uparrow$, Resblock and 1x1 Conv blocks from fusion latent representation ^y.

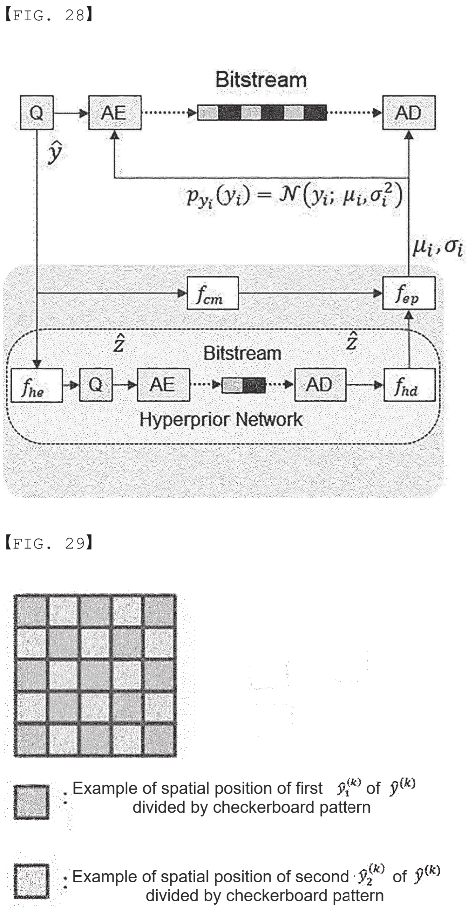

FIG. 28 shows an example of neural network-based fusion latent representation entropy encoding.

Through FIG. 28, a specific example of [E3-2] in FIG. 13 and [D1-2] in FIG. 14 is described.

Regarding [E3-2-1], as a Q block in FIG. 28 is an example of a fusion latent representation quantization means, it performs uniform quantization on all components $y_i$ of fusion latent representation $y$ (in this case, an usual rounding operation may be used), and may output quantized fusion latent representation $\hat{y}$.

In neural network-based image compression, quantization may be replaced with a process of adding uniform noise between -0.5 and 0.5 instead of quantization at a training time to ensure that a backpropagation algorithm may be used, and may use a rounding function at an inference time.

In addition, in order to reduce a mismatch between a learning process and an inference process, a rounding function is also used in a learning process, and in this case, an identity function may be used in calculating a gradient for a rounding function.

Regarding [E3-2-2] and [D1-2-1], an entropy model in FIG. 28 is an example of a fusion latent representation probability distribution estimation means, and may be configured based on an entropy model proposed in David Minnen et.al., "Joint autoregressive and hierarchical priors for learned image compression," Advances in neural information processing systems, vol.31, 2018.

hyperprior $\hat{z}$, which is additional information (side information), is encoded first from fusion latent representation $\hat{y}$ and transmitted to a decoder, which enables more accurate probability distribution estimation for a fusion latent representation.

In addition, additional information (context) for component $\hat{y}_i$ of a fusion latent representation to be encoded currently may be extracted based on components $\hat{y}_{<i}$ of a fusion latent representation that was already decoded and may be used for encoding.

In addition, an entropy model used in the following neural network-based technologies may be used as a fusion latent representation probability distribution estimation means.

Regarding [E3-2-3] and [D1-2-2], as AE and AD in FIG. 28 are an example of a fusion latent representation entropy encoding means and a fusion latent representation entropy decoding means, respectively, it represents arithmetic encoding and arithmetic decoding, and may use range coding other than arithmetic encoding.

FIG. 29 shows an example in which a latent representation for an image is partitioned unevenly in a channel direction to sequentially estimate a probability distribution.

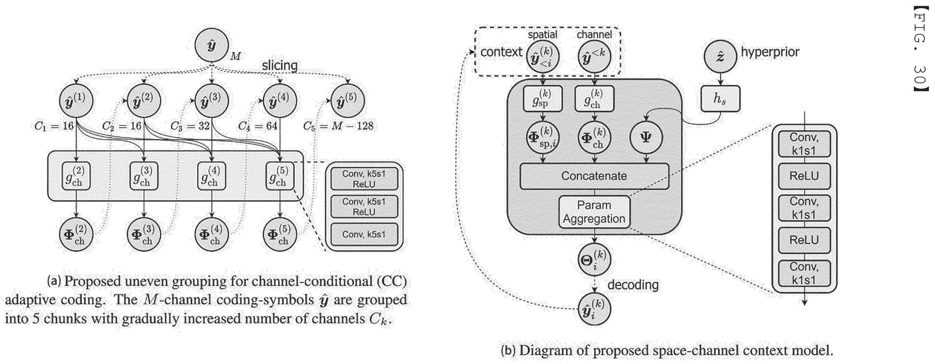

FIG. 30 shows an example in which 10 probability distribution estimations are performed sequentially after partitioning a latent representation into 10 groups.

Regarding [E3-2-2] and [D1-2-1], a Space-Channel ConTeXt (SCCTX) entropy model may be used as a fusion latent representation probability distribution estimation means.

SCCTX may include a method for additionally utilizing information on latent representation group $\hat{y}(<k)$ that was already decoded when sequentially estimating probability distribution for each latent representation group $\hat{y}(k)$ after partitioning a latent representation for an image into five groups $((\hat{y}(1), ..., \hat{y}(5))$ unevenly in a channel direction as in FIG. 30(a). This additional information may be referred to as a channel context.

In addition, as in FIG. 29, each latent representation group $\hat{y}(k)$ may be partitioned spatially in a checkerboard pattern and divided into two subgroups $\hat{y}_1(k)$ and $\hat{y}_2(k)$, and one subgroup that was already encoded may be utilized as additional information to estimate the probability distribution of the remaining one subgroup. This additional information may be referred to as a spatial context.

Finally, SCCTX may maximize the entropy encoding efficiency of a latent representation by sequentially performing a total of 10 probability distribution estimations (FIG. 30(b)) after partitioning a latent representation into 10 groups.

Even for a fusion latent representation in the present disclosure, this SCCTX may also be used as a fusion latent representation probability distribution estimation means.

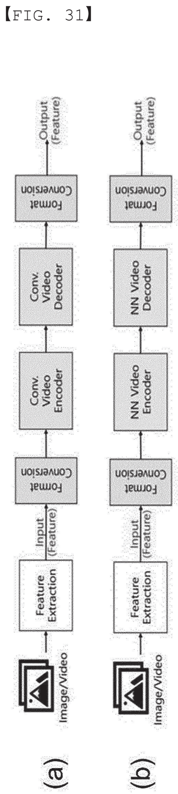

FIG. 31 shows an example in which feature map compression (or encoding/decoding) is performed based on a multi-layer feature map sequential fusion encoder/decoder of the present disclosure and an encoder/a decoder of an existing image compression codec and an example in which an artificial neural network is used for feature map compression (or encoding/decoding).

In FIG. 31, two classification examples of a feature map encoding method for a machine task (Feature Coding for Machines) may be confirmed.

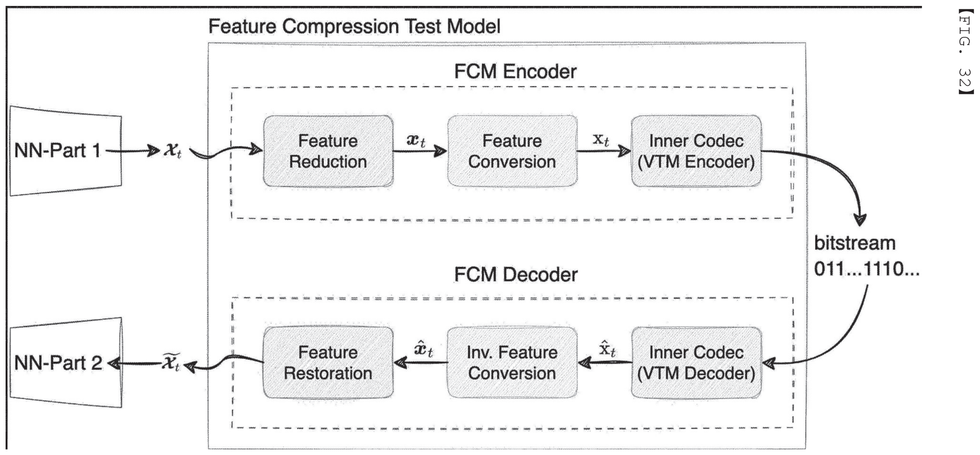

FIG. 32 shows details of a NN video encoder and a NN video decoder of FIG. 31.

FIG. 31(a) may show an example in which feature map encoding is performed based on an encoder and a decoder of an existing image compression codec such as HEVC or VVC and (b) may show an example in which feature map encoding is performed based on an encoder and a decoder of an artificial neural network codec for feature map encoding.

In the feature map encoding of a machine task, a feature map may be an usual multi-layer feature map. The present disclosure is a multi-layer feature map encoding/decoding method, but a multi-layer also includes a single layer, so the present disclosure may not be limited only to a multi-layer feature map. Hereinafter, only multi-layer feature map encoding will be described.

FIG. 31 may be related to Step [E3-1] in FIG. 13 and Step [D1-1] in FIG. 14.

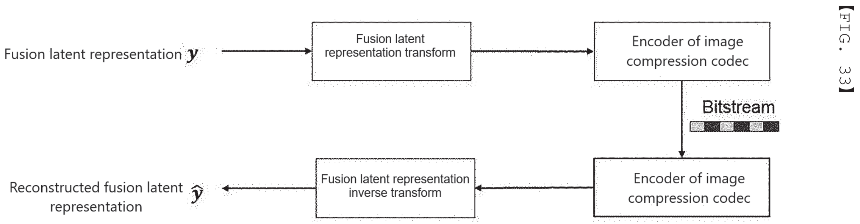

An embodiment of FIG. 31(a) may combine an image compression codec and the multi-layer feature map sequential fusion encoding and decoding of the present disclosure. In FIG. 31(a), a Format Conversion part uses a multi-layer feature map sequential fusion encoding neural network. In terms of a feature map encoding method in FIG. 10, an encoder of an image codec may be used instead of a quantization part and entropy encoding in an embodiment of FIG. 10. It may generate a bitstream by encoding a fusion latent representation, which is the output of fusion encoding, with an encoder of an image codec as in FIG. 33. In a decoding process, a decoder of an image codec may be used instead of an entropy decoding method and a dequantization process.

FIG. 33 shows a process of performing fusion latent representation encoding and decoding using an existing image compression codec and a multi-layer feature map sequential fusion encoder/decoder of the present disclosure.

In FIG. 33, it may be confirmed that a fusion latent representation transform process is added. This process has a form of a feature map as in FIG. 34, which is the output of a multi-layer feature map sequential fusion encoding neural network, which is because this feature map may not be directly used as input to an image compression codec encoder. An usual feature map may be expressed as a floating point value. Since an image compression codec requires an integer value representation, this transform may be required. And, since an image compression codec receives input in a form of a single frame or consecutive frames (sequences), this transform may also be required. Fusion latent representation transform may play a role in performing these two processes.

Since a decoding process is the reverse order of an encoding process, a description is omitted.

In FIG. 33, since a fusion latent representation is generally configured in a form of a feature map, a fusion latent representation transform and inverse transform process is described below by using a feature map transform and inverse transform process as an example.

FIG. 34 shows a configuration of a fusion latent representation feature map.

A feature map transform and inverse transform process may be composed of the following 1) ~ 3).

1) An arrangement means and a rearrangement means of feature map channels
2) A quantization means and a dequantization means of a feature value
3) Feature map transform information

Hereinafter, the specific contents will be reviewed.

1) An arrangement means and a rearrangement means of feature map channels

Like a feature map in FIG. 34, a feature map may be usually composed of multiple channels.

In this picture, the number of channels may be indicated as NC (or c), a horizontal size of a channel may be indicated as WC (or x) and a vertical size of a channel may be indicated as HC (or y).

In order to encode multiple channels, these channels may need to be transformed into a frame (or picture) form, which is a unit input to an encoder of an image codec.

In a feature map arrangement means, when transforming channels into a frame, one of a spatial arrangement method, a temporal arrangement method and a spatio-temporal arrangement method may be used.

A feature map frame transformed in this way may be compressed by an encoder of an image compression codec and reconstructed by a decoder of an image compression codec. A reconstructed feature map frame may be rearranged into an original channel configuration form by a feature map rearrangement means.

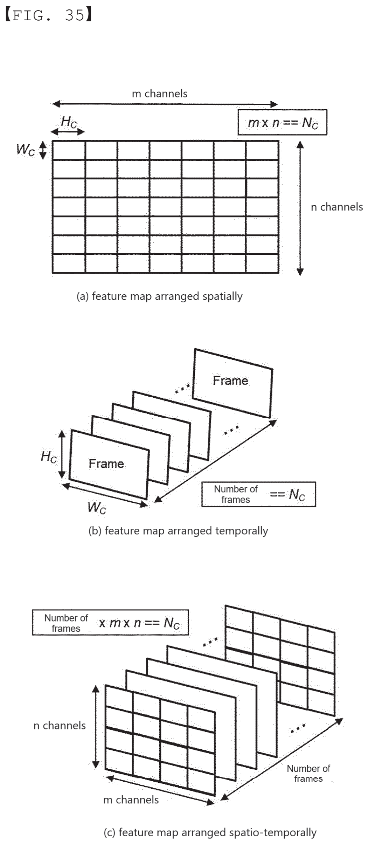

FIG. 35 shows frame packing through spatial, temporal and spatio-temporal arrangement for inputting a feature map into an existing image compression codec.

FIG. 35(a), (b) and (c) may represent a spatial arrangement method, a temporal arrangement method and a spatio-temporal arrangement method, respectively.

As shown in FIG. (a), spatial arrangement refers to arranging feature map channels in groups of m horizontally and in groups of n vertically in a form like a tile to form one feature map frame, and m and n are set to ensure that their product is the same as Nc, the total number of channels to be arranged. A spatially arranged feature map frame may be encoded by using an intra prediction (intra-frame prediction) method in an encoding means.

As shown in FIG. (b), temporal arrangement refers to arranging each feature map channel temporally to become one frame, and the total number of frames for one feature map may be set to be the same as Nc, the total number of channels forming that feature map. Temporally arranged feature map frames may be encoded by using an inter prediction (inter-frame prediction) method in an encoder of an image compression codec. In the present disclosure, a term called inter prediction which is widely used in the image encoding standards is used to help understanding, but it may be more appropriate to call it interchannel prediction to distinguish it from the existing inter prediction.

As shown in FIG. (c), spatio-temporal arrangement refers to arranging spatially arranged frames temporally, and may be set to ensure that a value obtained by multiplying the total number of frames by m x n, the number of channels forming one frame, is the same as Nc, the total number of channels to be arranged.

2) Quantization and dequantization of a feature value

A feature value may be quantized into n-bit integers by using a uniform quantization or non-uniform quantization method.

Equation 13 and Equation 14 may represent a n-bit uniform quantization process of feature value FOriginal and a uniform dequantization process of feature value ~FConverted reconstructed after quantization, respectively.

In a quantization process, as in Equation 13, rounding may be applied to reduce an error in an integerization process, and a process of clipping values that exceed a range of a n-bit integer may be included.

For quantization and dequantization, a value of n, the number of bits of a quantized result, and a value of Rangemax, a range of a feature value, must be set. A value of n may be set as a value that may be input to an usual image encoder such as 8 or 10, or may be set as a smaller value such as 4 or 6 to improve compression performance. A value of Rangemax may be obtained by subtracting the maximum value of feature values to be encoded from the minimum value, or may use a predetermined value.

As the value of n and the value of Rangemax are a parameter related to feature value quantization, a value used in an encoding process must also be used in a decoding process in the same way, so it may be predetermined in a multi-layer feature map encoder or may be included in a bitstream and transmitted to a multi-layer feature map decoder.

Quantization of a feature value may be performed before or after feature map arrangement.

Dequantization of a feature value may also be performed before or after feature map rearrangement, but it may be desirable that if feature value quantization was performed before feature map arrangement, dequantization is performed after rearrangement and if feature value quantization was performed after feature map arrangement, dequantization is performed before rearrangement to reduce a calculation error.

(Equation 13)

$$F_{Converted} = Round((F_{Original}) \times (2^n - 1) / Range_{max} + 2^{n-1}$$

$$IF, F_{Converted} > 2^{n-1}, \qquad F_{Converted} = 2^{n-1}$$

$$F_{Converted} < 0, \qquad F_{Converted} = 0$$

(Equation 14)

$$\tilde{F} = ((\tilde{F}_{Converted} - 2^{n-1}) / (2^n - 1)) \times Range_{max}$$

3) Feature map transform information

n, the number of bits used for feature value quantization, and Rangemax, a range of a feature value, may need to be transmitted to a dequantization means.

In addition, rearrangement may be performed according to an original channel configuration only when a feature map rearrangement means must know parameters including which method of spatial, temporal and spatio-temporal arrangement is used to arrange feature map channels, or the number of vertical channels or the number of horizontal channels forming one frame if spatial or temporal arrangement was used.

Accordingly, it may be desirable to predetermine this feature map transform information or encode it through a feature map encoding means, decode it in a feature map decoding means and transmit it to a feature map inverse transform means.

As an image compression codec, an encoder and a decoder of an existing video compression standard such as High Efficiency Video Coding (HEVC) or Versatile Video Coding (VVC) may be used, and in addition, an encoder or a decoder of a codec for still image compression may be used.

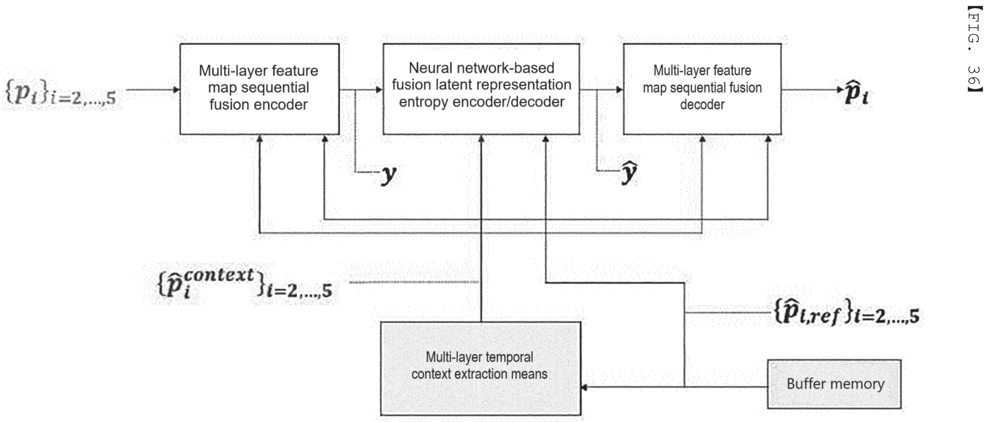

FIG. 36 shows an example of a block diagram applied to a multi-layer feature map encoder/decoder by using a multi-layer feature map that was previously decoded temporally.

When multi-layer feature map sequential fusion encoding/decoding means and entropy encoding/decoding means are applied to a video, encoding performance may be improved by utilizing a multi-layer feature map decoded temporally earlier than a current encoding target multi-layer feature map.

In the present disclosure, a current encoding target multi-layer feature map may be indicated as {Pi}i=2, ..., 5, and a multi-layer feature map that was encoded before {Pi}i=2, ..., 5 and decoded may be indicated as {^Pi,ref}i=2, ..., 5.

As indicated by a blue arrow in the figure, decoded multi-layer feature map {^Pi,ref}i=2, ..., 5 may be utilized as the additional input of a multi-layer feature map sequential fusion encoder, a neural network-based fusion latent representation entropy encoder/decoder and a multi-layer feature map sequential fusion decoder of the present disclosure.

In this case, {^Pi,ref}i=2, **...,** 5 may be utilized as additional input for all three components, a multi-layer feature map sequential fusion encoder, a neural network-based fusion latent representation entropy encoder/decoder and a multi-layer feature map sequential fusion decoder, or may be utilized as additional input only for some components.

In addition, after outputting multi-layer temporal context {^Picontext}i=2, **...,** 5 through a multi-layer temporal context extraction means by using decoded multi-layer feature map {^Pi,ref}i=2, **...,** 5 as input, as indicated by a red arrow in the figure, this {^Picontext}i=2, ..., 5 may be utilized as the additional input of a multi-layer feature map sequential fusion encoder, a neural network-based fusion latent representation entropy encoder/decoder and a multi-layer feature map sequential fusion decoder of the present disclosure.

In this case, {^Picontext}i=2, ..., 5 may be utilized as additional input for all three components, a multi-layer feature map sequential fusion encoder, a neural network-based fusion latent representation entropy encoder/decoder and a multi-layer feature map sequential fusion decoder, or may be utilized as additional input only for some components.

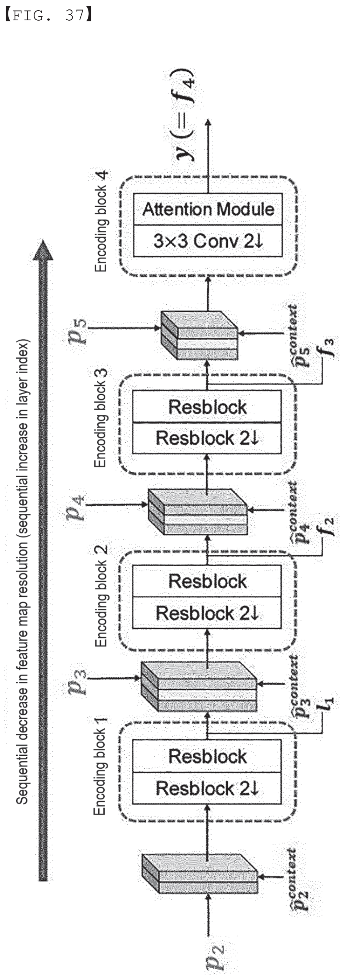

FIG. 37 shows an example of a neural network that applies a multi-layer feature map sequential fusion encoding means to an image by utilizing a multi-layer temporal context in FIG. 18, which is an example of a multi-layer feature map sequential fusion encoding neural network.

When a multi-layer feature map sequential fusion encoding means of the present disclosure is applied to a video, a multi-layer temporal context extracted from a multi-layer feature map decoded temporally earlier than a current encoding target multi-layer feature map may be utilized..

Current encoding target multi-layer feature map {Pi}i=2, ..., 5 and multi-layer temporal context {^Picontext}i=2, ..., 5 may be used as input to sequentially encode a multi-layer feature map into a fusion latent representation, outputting final fusion latent representation y.

Encoding block 1 may use as input a combination result between channels of ^P2context, which is a temporal context of a P2 layer, and P2.

Encoding block 2 may use as input a combination result between channels of ^P3context, l1, which is a temporal context of a P3 layer, and P3.

Encoding block 3 may use as input a combination result between channels of ^P4context, f2, which is a temporal context of a P4 layer, and P4.

Finally, encoding block 4 may use as input a combination result between channels of ^P5context, f3, which is a temporal context of a P5 layer, and P5.

As described in FIG. 36, multi-layer temporal context {^Picontext}i=2, ..., 5 in FIG. 37 may be used by being replaced with decoded multi-layer feature map {^Pi,ref}i=2, ..., 5.

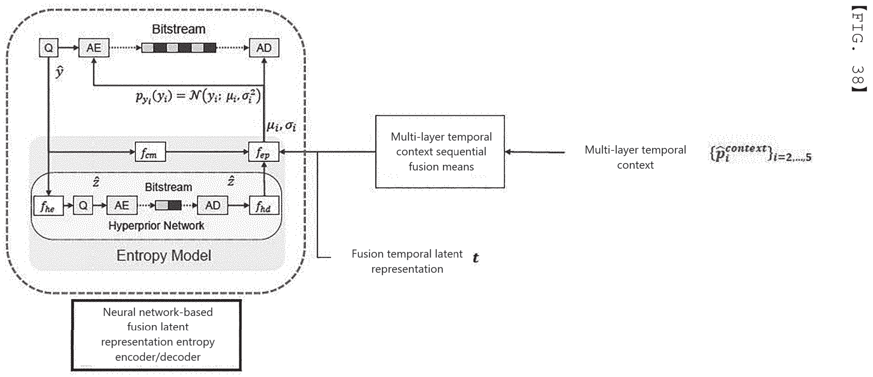

FIG. 38 shows an example of a neural network applied to a neural network-based fusion latent representation entropy encoder/decoder by utilizing a multi-layer temporal context.

When a neural network-based fusion latent representation entropy encoding/decoding means of the present disclosure is applied to a video, a multi-layer temporal context may be additionally utilized.

Specifically, FIG. 38 may be an example of a neural network applied to a neural network-based fusion latent representation entropy encoder/decoder by utilizing a multi-layer temporal context in FIG. 28, which is an example of a neural network-based fusion latent representation entropy encoder/decoder neural network.

A multi-layer temporal context sequential fusion means in FIG. 38 may output fusion temporal latent representation t, information for more accurate latent representation probability distribution estimation, by using multi-layer temporal context {^Picontext}i=2, ..., 5 as input. In addition, t may be used as additional input to fep in FIG. 28.

As described in FIG. 36 above, multi-layer temporal context {^Picontext}i=2, ..., 5 in FIG. 38 may be used by being replaced with decoded multi-layer feature map {^Pi,ref}i=2, ..., 5.

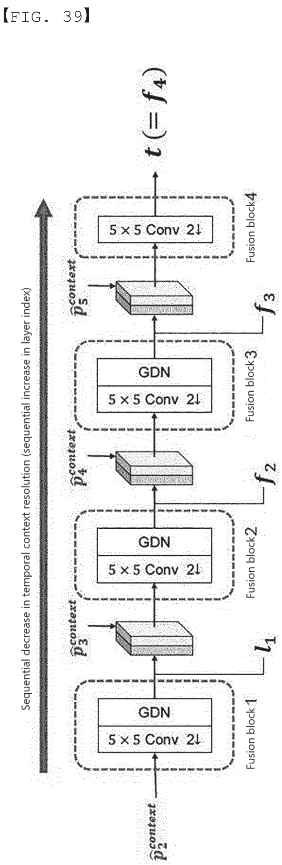

FIG. 39 shows an example of a multi-layer temporal context sequential fusion neural network, which is a multi-layer temporal context sequential fusion means.

Referring to FIG. 39, multi-layer temporal context {^Picontext}i=2, ..., 5 may be used as input to sequentially fuse a multi-layer temporal context into a fusion temporal latent representation through fusion blocks, finally outputting fusion temporal latent representation t. In this case, a fusion block may be an encoding block or a decoding block described above as a neural network block.

Fusion block 1, which uses {^P2context}, a temporal context of a P2 layer, as input, may be composed of a 5 X 5 2↓ convolutional neural network layer and GDN, and may output l1, an intermediate latent representation. Fusion block 2, which uses {^P3context} and l1, a temporal context of a P3 layer, as input, may also be composed of a 5 X 5 2↓ convolutional neural network layer and GDN, and may output f2, a fusion latent representation. Fusion block 3, which uses {^P4context} and f2, a temporal context of a P4 layer, as input, may also be composed of a 5 X 5 2↓ convolutional neural network layer and GDN, and may output f3, a fusion latent representation. Finally, fusion block 4, which uses {^P5ontext} and f3, a temporal context of a P5 layer, as input, may be composed of 5 X 5 2↓ convolutional neural network layers, and may output t(=f4, a final fusion temporal latent representation.

In this case, other than a fusion block in this embodiment, usual neural network-based fusion blocks for image processing may be combined and used. As described in FIG. 36 above, multi-layer temporal context {^Picontext}i=2, ..., 5 in FIG. 39 may be used by being replaced with decoded multi-layer feature map {^Pi,ref}i=2, ..., 5.

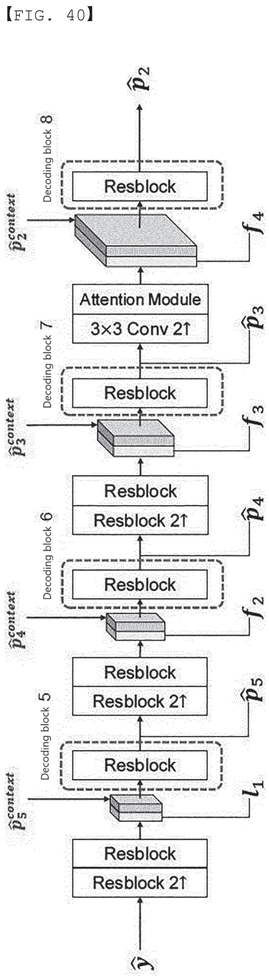

FIG. 40 shows an example of a neural network that applies a multi-layer feature map sequential fusion decoding means to a video by utilizing a multi-layer temporal context.

When a multi-layer feature map sequential fusion decoding means is applied to a video, a multi-layer temporal context may be utilized. Specifically, FIG. 40 shows an example of a neural network that applies a multi-layer feature map sequential fusion decoding means to a video by utilizing a multi-layer temporal context in FIG. 22, which is an example of a multi-layer feature map sequential fusion decoding neural network, and may sequentially decode a P layer feature map by using decoded fusion latent representation ^y and multi-layer temporal context {^Picontext}i=2, ..., 5 as input. As a result, reconstructed P layer feature map {^Pi}i=2, ..., 5 may be output. In this case, additional decoding blocks (decoding blocks 5 to 8 in FIG. 40) may be used to utilize a multi-layer temporal context.

Decoding block 5 which receives intermediate latent representation l1 and {^P5context}, which is a temporal context of a P5 layer, as input may be composed of Resblocks, and may output P layer feature map ^P5. Decoding block 6 which receives fusion latent representation f2 and {^P4context}, which is a temporal context of a P4 layer, as input may be composed of Resblocks, and may output P layer feature map ^P4. Decoding block 7 which receives fusion latent representation f3 and {^P3context}, which is a temporal context of a P3 layer, as input may be composed of Resblocks, and may output P layer feature map ^P3. Finally, decoding block 8 which receives fusion latent representation f4 and {^P2context}, which is a temporal context of a P2 layer, as input may be composed of Resblocks, and may output P layer feature map ^P2.

In this case, other than a decoding block in this embodiment, usual neural network-based decoding blocks for image processing may be combined and used. As described in FIG. 36 above, multi-layer temporal context {^Picontext} i=2, ..., 5 in FIG. 40 may be used by being replaced with decoded multi-layer feature map {^Pi,ref}i=2, ..., 5.

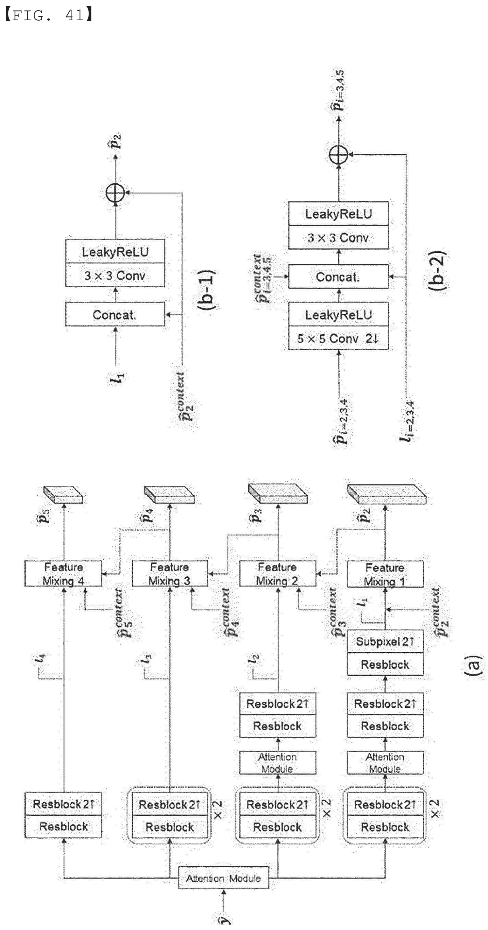

FIG. 41 shows an example of a neural network that applies a multi-layer feature map sequential fusion decoding means to an image by utilizing a multi-layer temporal context.

Specifically, FIG. 41(a) shows another example of a neural network that applies a multi-layer feature map sequential fusion decoding means to an image by utilizing a multi-layer temporal context in FIG. 24, which is another example of a multi-layer feature map sequential fusion decoding neural network, and may sequentially decode a P layer feature map through a combination of other decoding blocks by using fusion latent representation ^y and a multi-layer temporal context as input.

Feature Mixing block1, which uses intermediate latent representation l1 and ^P2context, which is a temporal context of a P2 layer, as input, may be configured as in FIG. 41(b-1) and may output ^P2. Feature Mixing block2, which uses intermediate latent representations l2 and ^P2 and ^P3context, which is a temporal context of a P3 layer, as input, may be configured as in FIG. 41(b-2) and may output ^P3. Feature Mixing block3, which uses intermediate latent representations l3 and ^P3 and ^P4context, which is a temporal context of a P4 layer, as input, may be configured as in FIG. 41(b-2) and may output ^P4. Finally, Feature Mixing block4, which uses intermediate latent representations l4 and ^P4 and ^P5context, which is a temporal context of a P5 layer, as input, may be configured as in FIG. 41(b-2) and may output ^P5.

As described in FIG. 36 above, multi-layer temporal context {^Picontext}i=2, ..., 5 in FIG. 41 may be used by being replaced with decoded multi-layer feature map {^Pi,ref}i=2, ..., 5.

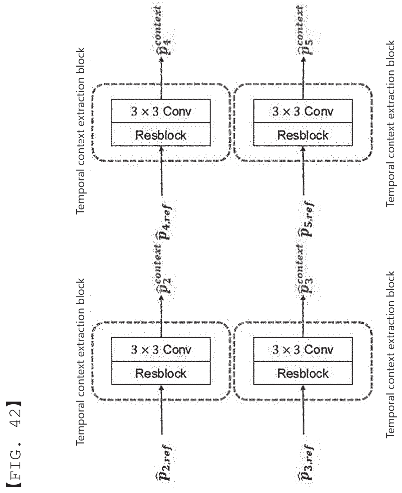

FIG. 42 shows an example of a neural network that extracts a temporal context of each layer feature map that was decoded previously without using motion information.

When a multi-layer temporal context is extracted, motion information may or may not be used, and a deformable convolutional neural network may be used.

Referring to FIG. 42, {^Picontext}i=2, ..., 5, a temporal context of each layer feature map, may be output by using previously decoded multi-layer feature map {^Pi,ref}i=2, ..., 5 as input. In this case, other than a temporal context extraction block in this embodiment, usual temporal context extraction blocks for image processing may be combined and used.

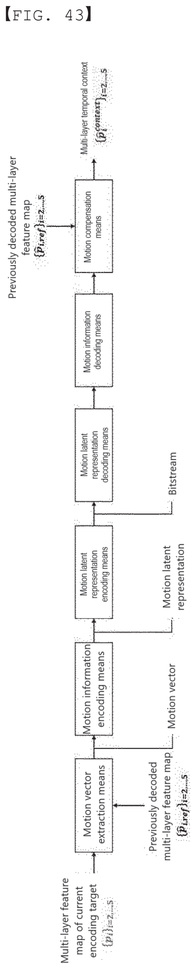

FIG. 43 shows an example of a neural network that extracts a temporal context of each layer feature map that was decoded previously by using motion information.

Referring to FIG. 43, {^Picontext}i=2, ..., 5, a temporal context of a multi-layer feature map, may be extracted by using previously decoded multi-layer feature map {^Pi,ref}i=2, ..., 5 and multi-layer feature map {Pi}i=2, ..., 5 of a current encoding target as input.

A motion information extraction means that uses a previously decoded multi-layer feature map and a multi-layer feature map of a current encoding target as input may extract a motion vector based on two inputs. A motion vector encoding means that uses a motion vector as input may output a motion latent representation, which is a latent representation of a motion vector. A motion latent representation encoding means that uses a motion latent representation as input may output a bitstream. A motion compensation means that uses a previously decoded multi-layer feature map

**EP 4 738 826 A1**

and a motion vector as input may output a multi-layer temporal context.

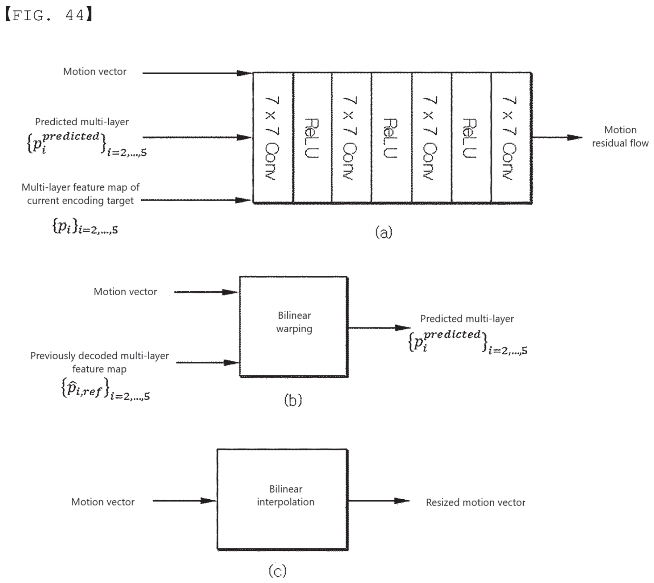

FIG. 44 shows detailed implementation of a neural network block and a function block diagram of the present disclosure.

FIG. 44(a) shows an example of a motion residual flow block, which is a component of a motion information extraction means to be described later, and may extract a motion residual flow by using a motion vector and multi-layer feature map {Pi}i=2, ..., 5 of a predicted P layer current encoding target as input. In FIG. 44(a), a 7X7 Conv block may refer to a convolutional neural network layer using a 7x7-sized kernel. In FIG. 44(a), ReLU may refer to a ReLU nonlinear layer usually used in a neural network for image processing. In this case, other than a motion residual flow generation block diagram in this embodiment, usual neural network-based motion residual flow generation block diagrams for image processing may be combined and used.

FIG. 44(b) shows an example of a motion compensation block diagram, and may extract a predicted P layer by using a motion vector and previously decoded multi-layer feature map {^Pi,ref}i=2, ..., 5 as input. In FIG. 44(b), bilinear warping may be a function that transforms a coordinate of previously decoded multi-layer feature map {^Pi,ref}i=2, ..., 5 based on a motion vector. In this case, other than a motion compensation block diagram in this embodiment, an usual motion compensation function for image processing may be combined and used.

FIG. 44(c) shows an example of a motion vector resizing block diagram, and may extract a resized motion vector by using a motion vector as input. In FIG. 44(c), bilinear interpolation may be a function that resizes a motion vector. In this case, other than a motion vector resizing block diagram in this embodiment, an usual resizing function for image processing may be combined and used.

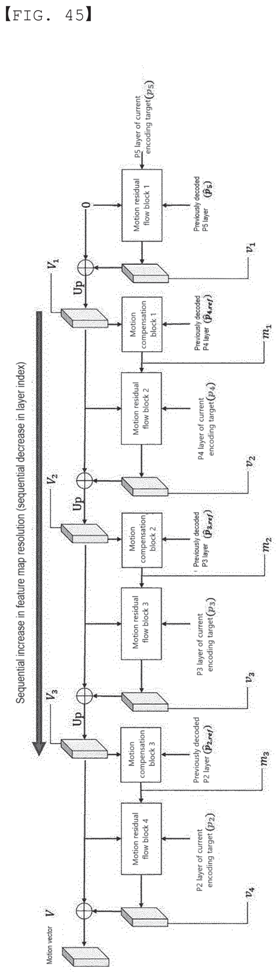

FIG. 45 shows an example of a motion information extraction neural network, which is a means for extracting motion information.

Referring to FIG. 45, motion information may be extracted by using previously decoded multi-layer feature map {^Pi,ref}i=2, ..., 5 and multi-layer feature map {Pi}i=2, ..., 5 of a current encoding target as input.

Motion residual flow block 1, which uses P5 which is a P5 layer of a current encoding target, previously decoded P5 layer ^P5,ref and a feature map filled with 0 as input, may output v1, which is an intermediate motion residual flow in a P5 layer size, and then output V1 by doubling a size of a width and a height. Motion compensation block 1, which uses previously decoded P4 layer ^P4,ref and V1 as input, may output m1, a predicted P layer in a P4 layer size, through bilinear warping. Motion residual flow block 2, which uses P4, a P4 layer of a current encoding target, and V1 and m1 as input, may generate v2, which is an intermediate motion residual flow in a P4 layer size, and then output V2 by doubling a size of a width and a height after addition between V1 and a component. Motion compensation block 2, which uses previously decoded P3 layer ^P3,ref and V2 as input, may output m2, a predicted P layer in a P3 layer size, through bilinear warping. Motion residual flow block 3, which uses P3, a P3 layer of a current encoding target, and V2 and m2 as input, may generate v3, which is an intermediate motion residual flow in a P3 layer size, and then output V3 by doubling a size of a width and a height after addition between V2 and a component. Motion compensation block 3, which uses previously decoded P2 layer ^P2,ref and V3 as input, may output m3, a predicted P layer in a P2 layer size, through bilinear warping. Motion residual flow block 4, which uses P2, a P2 layer of a current encoding target, and V3 and m3 as input, may generate v4, which is an intermediate motion residual flow in a P2 layer size, and then finally output motion vector V after addition between V3 and a component.

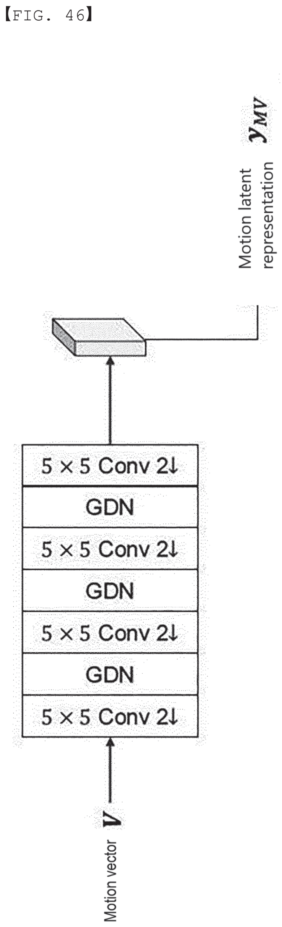

FIG. 46 shows an example of a motion vector encoding neural network, which is a motion vector encoding means.

Referring to FIG. 46, motion vector V may be used as input to encode a motion vector into a motion latent representation, outputting final motion latent representation yMV. A motion vector encoding means that uses motion vector V as input may be composed of four 5 X 5 2$_\downarrow$ convolutional neural network layers and three GDN layers, and may output final motion latent representation yMV.

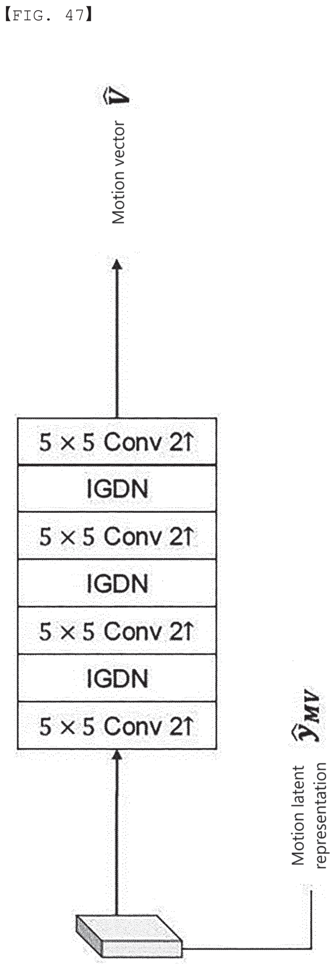

FIG. 47 shows an example of a motion vector decoding neural network, which is a motion vector decoding means.

Referring to FIG. 47, motion latent representation ^yMV may be used as input to decode a motion vector, outputting final motion vector ^V. A motion vector encoding means that uses motion latent representation ^yMV as input is composed of four 5 X 5 2$_\downarrow$ convolutional neural network layers and three GDN layers, and may output final motion vector ^V.

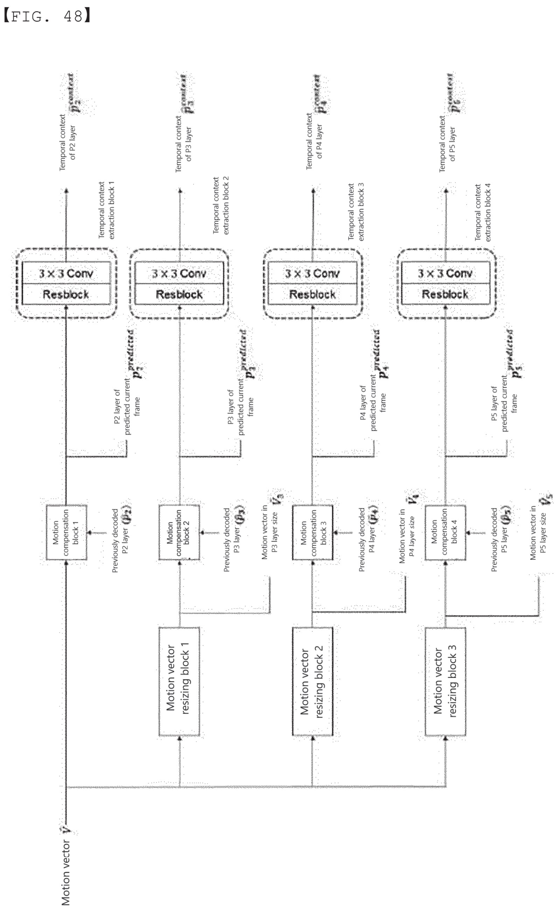

FIG. 48 shows an example of a motion compensation neural network, which is a motion compensation means.

Referring to FIG. 48, motion vector ^V and previously decoded multi-layer feature map {^Pi,ref}i=2, ..., 5 may be used as input to output final multi-layer temporal information {^Picontext}i=2, ..., 5 through motion compensation.

Motion compensation block 1, which uses motion vector ^V and previously decoded P2 layer ^P2,ref as input, may output P2Predicted, which is a P2 layer of a current frame predicted through bilinear warping. Temporal context extraction block 1, which uses P2Predicted, a P2 layer of a predicted current frame, as input, may be composed of Resblock and a 3 X 3 convolutional neural network layer, and may output temporal ^P2context of a final P2 layer.

Motion vector resizing block 1, which uses motion vector ^V as input, may output ^V3, a motion vector in a P3 layer size, which is obtained by reducing a motion vector by a P3 layer size through bilinear interpolation. Motion compensation block 2, which uses ^V3, a motion vector in a P3 layer size, and previously decoded P3 layer ^P3,ref as input, may output P3Predicted, a P3 layer of a current frame predicted through bilinear warping. Temporal context extraction block 2, which uses P3Predicted, a P3 layer of a predicted current frame, as input, may be composed of Resblock and a 3 X 3 convolutional neural network layer, and may output ^P3context, temporal information of a final P3 layer.

In this case, other than a temporal context extraction block in this embodiment, usual neural network-based temporal context extraction blocks for image processing may be combined and used.

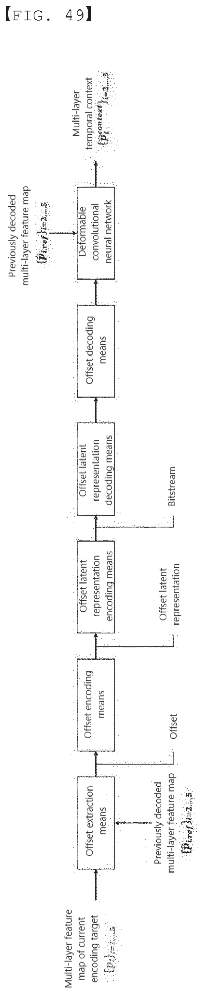

FIG. 49 shows an example of a neural network that extracts a temporal context of each layer feature map that was decoded previously by using a deformable convolutional neural network layer.

Referring to FIG. 49, {^Picontext}i=2, ..., 5, a temporal context of a multi-layer feature map, may be extracted by using previously decoded multi-layer feature map {^Pi,ref}i=2, ..., 5 and multi-layer feature map {Pi}i=2, ..., 5 of a current encoding target as input.

An offset extraction means that uses a previously decoded multi-layer feature map and a multi-layer feature map of a current encoding target as input may extract an offset that will be used in a deformable convolutional neural network based on two inputs. An offset encoding means that uses an offset as input may output an offset latent representation, which is a latent representation of an offset. An offset latent representation encoding means that uses an offset latent representation as input may output a bitstream. A deformable convolutional neural network that uses a previously decoded multi-layer feature map and an offset as input may output a multi-layer temporal context.

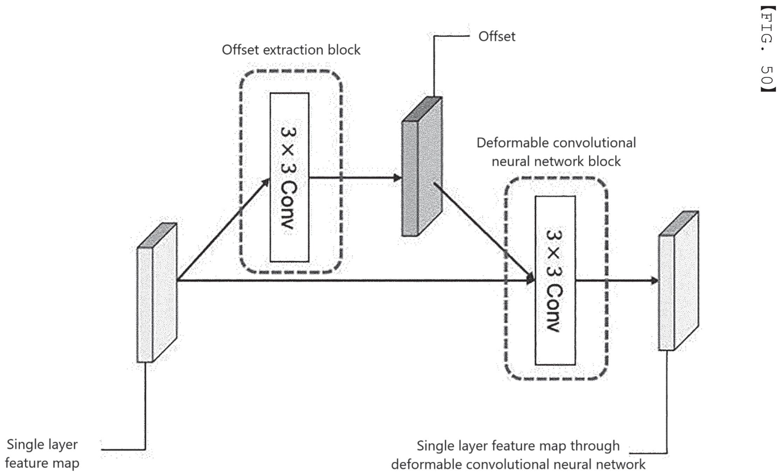

FIG. 50 shows an example of a deformable convolutional neural network.

Referring to FIG. 50, after extracting an offset through an offset extraction block that uses a single layer feature map as input, a single layer feature map may be output through a deformable convolutional neural network block that uses a corresponding offset and an input single layer feature map as input.

Other than a block in this embodiment, an offset extraction block and a deformable convolutional neural network block may use another usual convolutional neural network layer for image processing.

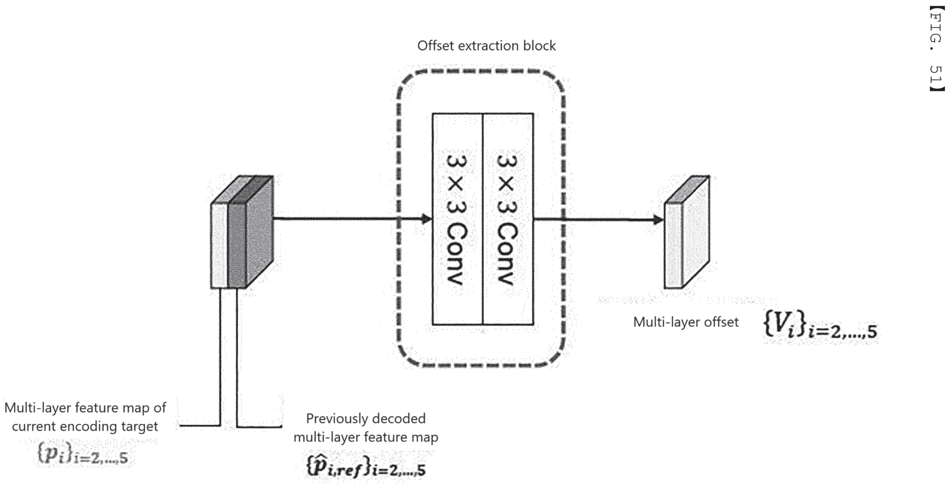

FIG. 51 shows an example of an offset extraction means neural network for extracting an offset used for a deformable convolutional neural network.

Referring to FIG. 51, previously decoded multi-layer feature map {^Pi,ref}i=2, ..., 5 and multi-layer feature map {Pi}i=2, ..., 5 of a current encoding target may be used as input to extract multi-layer offset {Vi}i=2, ..., 5.

An offset extraction block, which uses multi-layer feature map {Pi}i=2, ..., 5 of a current encoding target and previously decoded multi-layer feature map {^Pi,ref}i=2, ..., 5 as input, may output a multi-layer offset with the same size and channel as a multi-layer feature map of a current encoding target. In this case, an offset extraction block may be composed of two 3 X 3 convolutional neural networks, but an offset extraction block may be used in combination with other usual convolutional neural network layers for image processing.

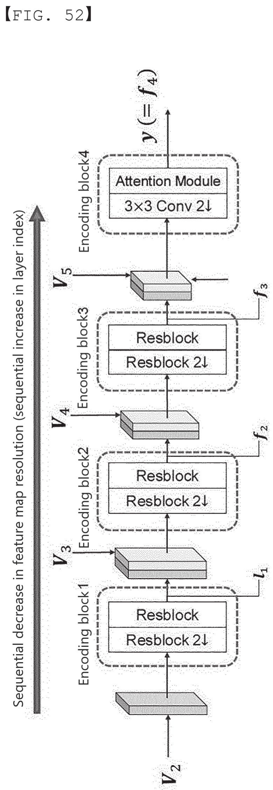

FIG. 52 shows an example of an offset encoding neural network, which is an offset encoding means.

Specifically, FIG. 52 may represent an example of a neural network that applies a multi-layer feature map sequential fusion encoding means to offset encoding by utilizing FIG. 18, which is an example of a multi-layer feature map sequential fusion encoding neural network.

Multi-layer offset {Vi}i=2, ..., 5 may be used as input to sequentially encode a multi-layer offset into a fusion latent representation, outputting final fusion latent representation y. Encoding block 1 may use V2 as input. Encoding block 2 may use a combination result between channels of V3 and l1 as input. Encoding block 3 may use a combination result between channels of V4 and l2 as input. Finally, encoding block 4 may use a combination result between channels of V5 and l3 as input. In this case, an encoding block may be used in combination with other usual convolutional neural network layers for image processing.

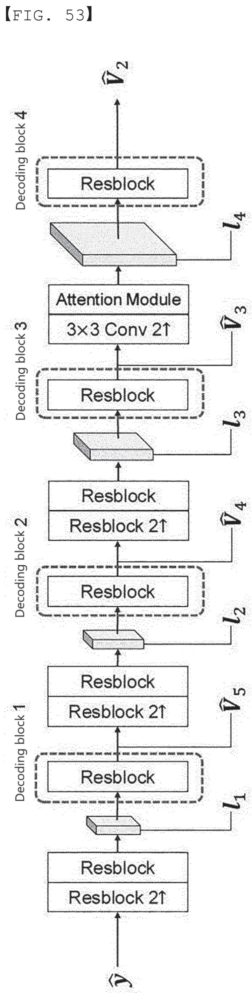

FIG. 53 shows an example of an offset decoding neural network, which is an offset decoding means.

Specifically, FIG. 53 may represent an example of a neural network that applies a multi-layer feature map sequential fusion decoding means to offset decoding by utilizing FIG. 22, which is an example of a multi-layer feature map sequential fusion decoding neural network.

Decoded fusion latent representation ^y may be used as input to sequentially decode a multi-layer offset. As a result, reconstructed multi-layer offset {^Vi}i=2, ..., 5 may be output. Decoding block 1, which uses intermediate latent representation l1 as input, may output ^V5. Decoding block 2, which uses intermediate latent representation l2 as input, may output ^V4. Decoding block 3, which uses intermediate latent representation l3 as input, may output ^V3. Finally, decoding block 4, which uses intermediate latent representation l4 as input, may output ^V2. In this case, a decoding block may be used in combination with other usual convolutional neural network layers for image processing.

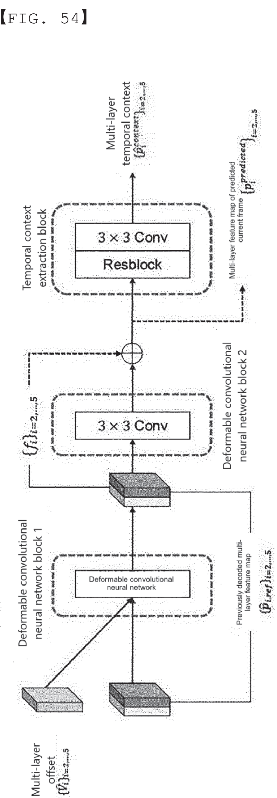

FIG. 54 shows an example of a motion compensation neural network, which is a motion compensation means using a deformable convolutional neural network layer.

Referring to FIG. 54, multi-layer offset {^Vi}i=2, ..., 5 and previously decoded multi-layer feature map {^Pi,ref}i=2, ..., 5 may be used as input to output final multi-layer temporal information {^Picontext}i=2, ..., 5 through a deformable convolutional neural network.

Deformable convolutional neural network block 1, which uses multi-layer offset {^Vi}i=2, ..., 5 and previously decoded multi-layer feature map {^Pi,ref}i=2, ..., 5 as input, may output {fi}i=2, ..., 5 through a deformable convolutional neural network. Motion compensation block 2, which uses {fi}i=2, ..., 5 and previously decoded multi-layer feature map {^Pi,ref}i=2, ..., 5 as input, may be composed of 3 x 3 convolutional neural network layers, and may output {Pipredicted} i=2, ..., 5, a multi-layer feature map of a predicted current frame. A temporal context extraction block which uses {Pipredicted}i=2, ..., 5, a multi-layer feature map of a predicted current frame, as input, may be composed of Resblock and a 3 x 3 convolutional neural network layer, and may output {^Picontext}i=2, ..., 5, a temporal context of a final multi-layer. In this case, other than a neural network block in this embodiment, usual neural network-based blocks for image processing may be combined and used.

A step of extracting a multi-layer feature map including a plurality of feature maps in a layer form from an input image of the present disclosure may be performed in a multi-layer feature map extraction unit. A step of sequentially encoding the multi-layer feature map through consecutive encoding blocks and outputting a fusion latent representation of a single layer may be performed in a fusion latent representation output unit. A step of encoding a fusion latent representation of the single layer into a bitstream may be performed in a bitstream encoding unit. In addition, a multi-layer feature map extraction unit, a fusion latent representation output unit and a bitstream encoding unit may be included in a multi-layer feature map encoding device. As the specific contents of each unit are specifically described in a means or a method above, they are omitted below.

A step of decoding a fusion latent representation of a single layer for a multi-layer feature map including a plurality of feature maps in a layer form from a bitstream of the present disclosure may be performed in a bitstream decoding unit. A step of sequentially decoding the multi-layer feature map through consecutive decoding blocks from a fusion latent representation of the single layer may be performed in a multi-layer feature map decoding unit. A bitstream decoding unit and a multi-layer feature map decoding unit may be included in a multi-layer feature map decoding device. As the specific contents of each unit are specifically described in a means or a method above, they are omitted below.

Exemplary methods of the present disclosure are expressed as a series of operations for clarity of a description, but it is not intended to limit order in which steps are performed, and if necessary, each step may be performed simultaneously or in different order. In order to implement a method according to the present disclosure, another step may be additionally included in an illustrated step, or some steps may be excluded and the remaining steps may be included, or some steps may be excluded and an additional another step may be included.

A variety of embodiments of the present disclosure do not enumerate all possible combinations, but are intended to describe a representative aspect of the present disclosure, and matters described in a variety of embodiments may be applied independently or in combination of two or more.

In addition, a variety of embodiments of the present disclosure may be implemented by hardware, firmware, software or a combination thereof. For implementation by hardware, implementation may be performed by one or more ASICs (Application Specific Integrated Circuits), DSPs (Digital Signal Processors), DSPDs (Digital Signal Processing Devices), PLDs (Programmable Logic Devices), FPGAs (Field Programmable Gate Arrays), general processors, controllers, microcontrollers, microprocessors, etc.

A scope of the present disclosure includes software or machine-executable instructions (e.g., an operating system, an application, firmware, a program, etc.) that cause an operation according to a method in various embodiments to be executed on a device or a computer, and a non-transitory computer-readable medium that such software or instructions are stored and executable on a device or a computer.

[Industrial Availability]

The present disclosure may be used in a field for an encoding/decoding method and device of a feature map extracted through an artificial neural network.

**Claims**

1. A multi-layer feature map encoding method, the method comprising:

   extracting a multi-layer feature map including a plurality of feature maps in a layer form from an input image;
   sequentially encoding the multi-layer feature map through consecutive encoding blocks to output a fusion latent representation of a single layer; and
   encoding the fusion latent representation of the single layer into a bitstream.

2. The method of Claim 1,
   wherein the consecutive encoding blocks include a first encoding block that uses a feature map having a highest resolution of the multi-layer feature map as an input, a second encoding block that uses a first intermediate latent representation which is an output of the first encoding block as an input, a third encoding block that uses a first fusion latent representation which is an output of the second encoding block as an input, and a fourth encoding block that uses a second fusion latent representation which is an output of the third encoding block as an input to output the fusion latent representation of the single layer.

3. The method of Claim 2,
wherein an input of the second encoding block, the third encoding block, and the fourth encoding block includes a feature map of the multi-layer feature map having a same resolution as an input intermediate latent representation or input fusion latent representation.

4. The method of Claim 2,
wherein the first encoding block, the second encoding block, and the third encoding block include a convolutional neural network layer using a nxn-sized kernel in a same structure and a nonlinear layer of LeakyReLU.

5. The method of Claim 4,
wherein the fourth encoding block does not include the nonlinear layer of the LeakyReLU.

6. The method of Claim 2,
wherein a resolution of an output of the first encoding block, the second encoding block, the third encoding block and the fourth encoding block is lower than a resolution of an input.

7. The method of Claim 1,
wherein the consecutive encoding blocks include a first encoding block that uses a feature map having a highest resolution of the multi-layer feature map as an input, a second encoding block that uses a first intermediate latent representation which is an output of the first encoding block as an input, a third encoding block that uses a feature map of the multi-layer feature map having a lower resolution than a first fusion latent representation which is an output of the second encoding block as an input, and a fourth encoding block that uses a second intermediate latent representation which is an output of the third encoding block and the first fusion latent representation as an input to output the fusion latent representation of the single layer.

8. The method of Claim 7,
wherein an input of the second encoding block and the fourth encoding block includes a feature map of the multi-layer feature map having a same resolution as an input intermediate latent representation or input fusion latent representation.

9. The method of Claim 7,
wherein the first encoding block, the second encoding block, and the third encoding block include a convolutional neural network layer using a nxn-sized kernel in a same structure and a nonlinear layer of LeakyReLU.

10. The method of Claim 9,
wherein the fourth encoding block does not include the nonlinear layer of the LeakyReLU.

11. The method of Claim 7,

wherein a resolution of an output of the first encoding block, the second encoding block, and the fourth encoding block is lower than a resolution of an input, and
wherein a resolution of the output of the third encoding block is higher than a resolution of an input.

12. A multi-layer feature map decoding method, the method comprising:

decoding a fusion latent representation of a single layer for a multi-layer feature map including a plurality of feature maps in a layer form from a bitstream; and
sequentially decoding the multi-layer feature map through consecutive decoding blocks from the fusion latent representation of the single layer.

13. The method of Claim 12,
wherein the consecutive decoding blocks include a first decoding block that uses the fusion latent representation of the single layer as an input, a second decoding block that uses a first feature map of the multi-layer feature map having a lowest resolution which is an output of the first decoding block as an input, a third decoding block that uses a second feature map which is an output of the second decoding block having a higher resolution than the first feature map as an input, and a fourth decoding block that uses a third feature map which is an output of the third decoding block having a higher resolution than the second feature map as an input to output a fourth feature map of the multi-layer feature map having a highest resolution.

14. The method of Claim 13,
wherein the first decoding block, the second decoding block, and the third decoding block include a convolutional neural network layer using a nxn-sized kernel in a same structure and a nonlinear layer of LeakyReLU.

15. The method of Claim 14,
wherein the fourth decoding block does not include the nonlinear layer of the LeakyReLU.

16. The method of Claim 13,
wherein a resolution of an output of the first decoding block, the second decoding block, the third decoding block and the fourth decoding block is higher than a resolution of an input.

17. The method of Claim 12,
wherein the consecutive decoding blocks include a first decoding block that uses the fusion latent representation of the single layer as an input, a second decoding block that uses a first feature map which is an output of the first decoding block as an input to output a second feature map of the multi-layer feature map having a lowest resolution, a third decoding block that uses the first feature map as an input to output a third feature map having a higher resolution than the first feature map, and a fourth decoding block that uses the third feature map as the input to output a fourth feature map of the multi-layer feature map having a highest resolution.

18. The method of Claim 17,
wherein the second decoding block, the third decoding block, and the fourth decoding block include a convolutional neural network layer using a nxn-sized kernel in a same structure and a nonlinear layer of LeakyReLU.

19. The method of Claim 17,

wherein a resolution of an output of the first decoding block, the third decoding block, and the fourth decoding block is higher than a resolution of an input, and
wherein a resolution of an output of the second decoding block is lower than the resolution of an input.

20. A computer readable recording medium storing a bitstream generated by a multi-layer feature map encoding method, wherein the multi-layer feature map encoding method includes:

extracting a multi-layer feature map including a plurality of feature maps in a layer form from an input image;
sequentially encoding the multi-layer feature map through consecutive encoding blocks to output a fusion latent representation of a single layer; and
encoding the fusion latent representation of the single layer into a bitstream.

【FIG. 1】

【FIG. 2】

【FIG. 3】

【FIG. 4】

【FIG. 5】

EP 4 738 826 A1

YOLO v3

Convolutional

Residual 1

Residual 2

Residual 8

×2

Convolutional ×5

Convolutional

52×52 ×(5+C) ×3

Output 3

Up Sample

Convolutional

Residual 8

×2

Convolutional ×5

Convolutional

26×26 ×(5+C) ×3

Output 2

Up Sample

Convolutional

Residual 4

×2

Convolutional ×5

Convolutional

13×13 ×(5+C) ×3

Output 1

(a)

Convolutional {
Conv2D
BatchNormalization
LeakyReLU

(b)

Res Unit {
Convolutional
Convolutional
⊕

(c)

Residual 4 {
Convolutional
Res Unit
Res Unit × 4

yolo v3 Output 1

Output 1

13×13× 3×(5+C) =

Prediction Feature Map
13×13×3×(4+1+C)

Objectness Score

$t_x$ | $t_y$ | $t_x$ | $t_h$ | $p_0$ | $p_1$ | $p_2$ | … | $p_c$

3 anchor boxes per one grid cell

Box-Coordinates     Class Probabilities

yolo v3 Output 2

Output 2

26×26× 3×(5+C) =

Prediction Feature Map
26×26×3×(4+1+C)

Objectness Score

$t_x$ | $t_y$ | $t_x$ | $t_h$ | $p_0$ | $p_1$ | $p_2$ | … | $p_c$

3 anchor boxes per one grid cell

Box-Coordinates     Class Probabilities

yolo v3 Output 3

Output 3

52×52× 3×(5+C) =

Prediction Feature Map
52×52×3×(4+1+C)

Objectness Score

$t_x$ | $t_y$ | $t_x$ | $t_h$ | $p_0$ | $p_1$ | $p_2$ | … | $p_c$

3 anchor boxes per one grid cell

Box-Coordinates     Class Probabilities

【FIG. 6】

Multi-task model for collaborative intelligence.

【FIG. 7】

【FIG. 8】

【FIG. 9】

Decoding neural network

【FIG. 10】

Neural network-based feature map encoding method

【FIG. 11】

Multi-layer feature map sequential fusion encoding neural network

Sequential decrease in feature map resolution
(Sequential increase in layer index)

【FIG. 12】

Multi-layer feature map sequential fusion decoding neural network

Sequential increase in feature map resolution
(Sequential decrease in layer index)

【FIG. 13】

Multi-layer feature map encoding method and device includes

[E1] multi-layer feature map extraction means for extracting multi-layer feature map from input image;

[E2] multi-layer feature map sequential fusion encoding means for sequentially transforming the extracted multi-layer feature map into fusion latent representation and finally outputting fusion latent representation of single layer; AND

[E3] fusion latent representation encoding means for transforming the fusion latent representation into bitstream

in extracting and encoding multi-layer feature map from input image

[E2-1] the extracted multi-layer feature map may have been normalized by usual methods such as Min-Max normalization, Z-score normalization, etc.

Fusion latent representation encoding means is one of

[E3-1] fusion latent representation encoding using image compression codec;

[E3-2] neural network-based fusion latent representation entropy encoding

as the fusion latent representation encoding means.

Fusion latent representation encoding using image compression codec includes

[E3-1-1] fusion latent representation transform means for performing process such as quantization, padding or resizing, rearrangement, etc. on the fusion latent representation to make it into format suitable for encoding;

[E3-1-2] encoder of image compression codec for encoding the transformed fusion latent representation into bitstream form

in performing the fusion latent representation encoding using image compression codec

Neural network-based fusion latent representation entropy encoding includes

[E3-2-1] fusion latent representation quantization means for quantizing the fusion latent representation;

[E3-2-2] fusion latent representation probability distribution estimation means for estimating probability distribution of quantized fusion latent representation; and

[E3-2-3] fusion latent representation entropy encoding means for entropy encoding quantized fusion latent representation by using probability distribution of the estimated fusion latent representation

in performing the neural network-based fusion latent representation entropy encoding

【FIG. 14】

**Multi-layer feature map decoding method and device includes**

**[D1] fusion latent representation decoding means for decoding latent representation from input bitstream;**

**[D2] multi-layer feature map sequential fusion decoding means for sequentially decoding multi-layer feature map by using the fusion latent representation as input**

in decoding multi-layer feature map from input bitstream.

**Fusion latent representation decoding means is one of**

**[D1-1] fusion latent representation decoding using image compression codec;**

**[D1-2] neural network-based fusion latent representation entropy decoding**

as the fusion latent representation decoding means.

**Fusion latent representation decoding using image compression codec includes**

**[D1-1-1] decoder of image compression codec for decoding fusion latent representation from input bitstream;**

**[D1-1-2] fusion latent representation inverse transform means for performing reverse process of quantization, padding or resizing and rearrangement process on the fusion latent representation**

in performing fusion latent representation decoding using the image compression codec.

**Neural network-based fusion latent representation entropy decoding includes**

**[D1-2-1] fusion latent representation probability distribution estimation means for estimating probability distribution of quantized fusion latent representation;**

**[D1-2-2] fusion latent representation entropy decoding means for entropy decoding quantized fusion latent representation from input bitstream by using probability distribution of the estimated fusion latent representation**

in performing the neural network-based fusion latent representation entropy encoding.

【FIG. 15】

【FIG. 16】

【FIG. 17】

(a) Resblock

(b) Resblock 2 ↓

(c) Resblock 2 ↑

(d) Feature Mixing

【FIG. 18】

【FIG. 19】

【FIG. 20】

【FIG. 21】

Sequential decrease in feature map resolution (sequential increase in layer index)

Sequential increase in feature map resolution (sequential decrease in layer index)

$p_3$   $p_4$

Encoding block 1   Encoding block 2   Encoding block 3

Resblock   Resblock 2↓
Resblock   Resblock 2↓
Resblock   Resblock 2↑

$p_2$   $p_5$

$l_1$   $f_2$   $l_3$

Encoding block 4

Attention Module

3×3 Conv 2↓

$y\,(=f_4)$

Fusion latent representation

【FIG. 22】

【FIG. 23】

Sequential increase in feature map resolution
(sequential decrease in layer index)

Sequential decrease in feature map resolution
(sequential increase in layer index)

Decoding block 4  $\widehat{\boldsymbol{p}}_3$  Decoding block 3  $\widehat{\boldsymbol{p}}_4$  Decoding block 2

$\widehat{\boldsymbol{p}}_2$

Resblock
Resblock 2↑

Resblock
Resblock 2↑

Resblock
Resblock 2↓

$\widehat{\boldsymbol{p}}_5$

Decoding block 1

Attention Module

3×3 Conv 2↑

$\widehat{\boldsymbol{y}}$

Fusion latent representation

【FIG. 24】

【FIG. 25】

【FIG. 26】

【FIG. 27】

【FIG. 28】

【FIG. 29】

$\square$ : Example of spatial position of first $\hat{y}_1^{(k)}$ of $\hat{y}^{(k)}$ divided by checkerboard pattern

$\square$ : Example of spatial position of second $\hat{y}_2^{(k)}$ of $\hat{y}^{(k)}$ divided by checkerboard pattern

【FIG. 30】

(b) Diagram of proposed space-channel context model.

(a) Proposed uneven grouping for channel-conditional (CC) adaptive coding. The $M$-channel coding-symbols $\hat{y}$ are grouped into 5 chunks with gradually increased number of channels $C_k$.

【FIG. 31】

【FIG. 32】

【FIG. 33】

【FIG. 34】

Configuration of feature map

【FIG. 35】

(a) feature map arranged spatially

(b) feature map arranged temporally

(c) feature map arranged spatio-temporally

【FIG. 36】

【FIG. 37】

【FIG. 38】

【FIG. 39】

【FIG. 40】

【FIG. 41】

【FIG. 42】

Temporal context extraction block

Temporal context extraction block

$\hat{p}_{2,ref}$ → Resblock | 3 × 3 Conv → $\hat{p}_2^{context}$

$\hat{p}_{4,ref}$ → Resblock | 3 × 3 Conv → $\hat{p}_4^{context}$

$\hat{p}_{3,ref}$ → Resblock | 3 × 3 Conv → $\hat{p}_3^{context}$

$\hat{p}_{5,ref}$ → Resblock | 3 × 3 Conv → $\hat{p}_5^{context}$

Temporal context extraction block

Temporal context extraction block

【FIG. 43】

【FIG. 44】

Motion vector

Predicted multi-layer
$\left\{p_i^{predicted}\right\}_{i=2,\ldots,5}$

Multi-layer feature map of
current encoding target

$\{p_i\}_{i=2,\ldots,5}$

7 x 7 Conv — ReLU — 7 x 7 Conv — ReLU — 7 x 7 Conv — ReLU — 7 x 7 Conv

Motion
residual flow

(a)

Motion vector

Previously decoded multi-layer
feature map

$\left\{\hat{p}_{i,ref}\right\}_{i=2,\ldots,5}$

Bilinear
warping

Predicted multi-layer
$\left\{p_i^{predicted}\right\}_{i=2,\ldots,5}$

(b)

Motion vector

Bilinear
interpolation

Resized motion vector

(c)

【FIG. 45】

【FIG. 46】

Motion vector $V$ →
5 × 5 Conv 2↓
GDN
5 × 5 Conv 2↓
GDN
5 × 5 Conv 2↓
GDN
5 × 5 Conv 2↓
→ Motion latent representation $\mathcal{Y}_{MV}$

【FIG. 47】

Motion vector $\hat{V}$

5 × 5 Conv 2↑

IGDN

5 × 5 Conv 2↑

IGDN

5 × 5 Conv 2↑

IGDN

5 × 5 Conv 2↑

Motion latent representation $\hat{y}_{MV}$

【FIG. 48】

Motion vector $\hat{V}$

Motion compensation block 1

Previously decoded P2 layer $(\hat{p}_2)$

P2 layer of predicted current frame $p_2^{predicted}$

Resblock

3 × 3 Conv

Temporal context extraction block 1

Temporal context of P2 layer $p_2^{context}$

Motion vector resizing block 1

Motion compensation block 2

Previously decoded P3 layer $(\hat{p}_3)$

Motion vector in P3 layer size $\hat{V}_3$

P3 layer of predicted current frame $p_3^{predicted}$

Resblock

3 × 3 Conv

Temporal context extraction block 2

Temporal context of P3 layer $p_3^{context}$

Motion vector resizing block 2

Motion compensation block 3

Previously decoded P4 layer $(\hat{p}_4)$

Motion vector in P4 layer size $\hat{V}_4$

P4 layer of predicted current frame $p_4^{predicted}$

Resblock

3 × 3 Conv

Temporal context extraction block 3

Temporal context of P4 layer $p_4^{context}$

Motion vector resizing block 3

Motion compensation block 4

Previously decoded P5 layer $(\hat{p}_5)$

Motion vector in P5 layer size $\hat{V}_5$

P5 layer of predicted current frame $p_5^{predicted}$

Resblock

3 × 3 Conv

Temporal context extraction block 4

Temporal context of P5 layer $p_5^{context}$

【FIG. 49】

【FIG. 50】

【FIG. 51】

【FIG. 52】

【FIG. 53】

【FIG. 54】

## INTERNATIONAL SEARCH REPORT

| International application No. |
|---|
| **PCT/KR2024/009148** |

| A. | CLASSIFICATION OF SUBJECT MATTER |
|---|---|

**H04N 19/196**(2014.01)i; **H04N 19/124**(2014.01)i; **H04N 19/13**(2014.01)i; **H04N 19/136**(2014.01)i; **G06N 3/0464**(2023.01)i; **G06N 3/048**(2023.01)i; **G06N 3/084**(2023.01)i; **G06V 10/44**(2022.01)i; **G06V 10/82**(2022.01)i; **G06V 10/764**(2022.01)i

According to International Patent Classification (IPC) or to both national classification and IPC

| B. | FIELDS SEARCHED |
|---|---|

Minimum documentation searched (classification system followed by classification symbols)

H04N 19/196(2014.01); G06F 18/00(2023.01); G06N 3/04(2006.01); G06N 3/08(2006.01); G06T 9/00(2006.01); G06V 10/25(2022.01); G06V 10/80(2022.01); G10L 19/032(2013.01); G10L 19/16(2013.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비트스트림(bitstream), 다계층 특징맵(multilayer feature maps), 순차적 부호화 (sequential encoding), 중간 잠재표현(intermediate latent representation), 융합 잠재표현(fusion latent representation)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2022-0125719 A (BEIJING BAIDU NETCOM SCIENCE TECHNOLOGY CO., LTD.) 14 September 2022 (2022-09-14)<br>See paragraph [0089]; and claims 1-2. | 1-20 |
| A | KR 10-2022-0076247 A (INDUSTRY-ACADEMIC COOPERATION FOUNDATION, YONSEI UNIVERSITY) 08 June 2022 (2022-06-08)<br>See paragraphs [0036]-[0037]. | 1-20 |
| A | KR 10-2021-0038027 A (INDUSTRY ACADEMIC COOPERATION FOUNDATION OF YEUNGNAM UNIVERSITY) 07 April 2021 (2021-04-07)<br>See paragraphs [0010]-[0011]. | 1-20 |
| A | KR 10-2022-0136176 A (HYUNDAI MOTOR COMPANY et al.) 07 October 2022 (2022-10-07)<br>See paragraphs [0056]-[0058]. | 1-20 |

✓ Further documents are listed in the continuation of Box C.    ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 October 2024** | **21 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/009148** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0109299 A (ELECTRONICS AND TELECOMMUNICATIONS RESEARCH INSTITUTE) 04 August 2022 (2022-08-04) See paragraphs [0052]-[0053]. | 1-20 |

Form PCT/ISA/210 (second sheet) (July 2022)

**INTERNATIONAL SEARCH REPORT**
Information on patent family members

International application No.

**PCT/KR2024/009148**

| Patent document cited in search report | | | Publication date (day/month/year) | Patent family member(s) | | | Publication date (day/month/year) |
|---|---|---|---|---|---|---|---|
| KR | 10-2022-0125719 | A | 14 September 2022 | JP | 2023-527615 | A | 30 June 2023 |
| | | | | US | 2024-0193923 | A1 | 13 June 2024 |
| KR | 10-2022-0076247 | A | 08 June 2022 | KR | 10-2546600 | B1 | 22 June 2023 |
| KR | 10-2021-0038027 | A | 07 April 2021 | KR | 10-2305981 | B1 | 27 September 2021 |
| KR | 10-2022-0136176 | A | 07 October 2022 | CN | 117063201 | A | 14 November 2023 |
| | | | | US | 2024-0013448 | A1 | 11 January 2024 |
| | | | | WO | 2022-211409 | A1 | 06 October 2022 |
| KR | 10-2022-0109299 | A | 04 August 2022 | US | 2022-0238126 | A1 | 28 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHI**. Real-Time Single Image and Video Super-Resolution Using an Efficient Sub-Pixel Convolutional Neural Network. *Proceedings of the IEEE Conference on Computer Vision and Pattern Recognition (CVPR)*, 2016, 1874-1883
- **J.BALLE**. Density modeling of ' images using a generalized normalization transformation. *arXiv:1511.06281*, 2015
- **Z.CHENG**. Learned image compression with discretized gaussian mixture likelihoods and attention modules. *Proceedings of the IEEE/CVF Conference on Computer Vision and Pattern Recognition*, 2020, 7939-7948
- **DAVID MINNEN**. Joint autoregressive and hierarchical priors for learned image compression. *Advances in neural information processing systems*, 2018, vol. 31